# EUROPEAN PATENT APPLICATION

(11) **EP 4 674 493 A1**
(43) Date of publication of application: **07.01.2026**
(21) Application number: 25187301.4
(22) Date of filing: 03.07.2025
(51) Int. Cl.: A63F 13/795, A63F 13/86

(54) **GAME DEVICE, METHOD, PROGRAM, AND INFORMATION PROCESSING SYSTEM**

(30) Priority: 05.07.2024 JP 2024108753
(71) Applicant: Nintendo Co., Ltd., Kyoto 601-8501 (JP)
(72) Inventor: OIWA, Ryota, Kyoto 601-8501 (JP); ASHIDA, Jun, Kyoto 601-8501 (JP); ENDO, Hiroya, Kyoto 601-8501 (JP); TSUKADA, Yohei, Kyoto 601-8501 (JP); ONO, Sumikazu, Kyoto 601-8501 (JP); IWAHASHI, Atsuya, Kyoto 601-8501 (JP); KOBAYASHI, Masayoshi, Kyoto 601-8501 (JP); ONISHI, Masato, Kyoto 601-8501 (JP); TANIMURA, Wataru, Kyoto 601-8501 (JP); IWAMOTO, Shuta, Kyoto 601-8501 (JP); OOMORI, Toshiaki, Kyoto 601-8501 (JP); FUJITA, Akifumi, Kyoto 601-8501 (JP)
(74) Representative: Bardehle Pagenberg Partnerschaft mbB Patentanwälte Rechtsanwälte

(57) **Abstract**

A game device (30) configured to communicate with another game device (30) includes a stream transmitter configured to stream an image of a game app being executed by a first account to another game device (30), a receiver configured to receive data indicating an image of a game app being executed by a second account, and an image generator. The image generator is configured to generate a first display image (Sd) including a first image (Ma1) and a plurality of second images (Ds1 to Ds4), the first image (Ma1) being based on an image (GMA) of a game application running in a game device with which the first account is associated. The plurality of second images (Ds1 to Ds4) are associated with respective different accounts. While a game device with which an account associated with one of the second images is streaming a streaming game image, when the account associated with the one of the second images is the first account, the one of the second images (Ds1 to Ds4) includes an image based on the image of the running game application, and when it is another account, the one of the second images (Ds1 to Ds4) includes the received streaming game image. While the game device with which the account associated with the one of the second images is not streaming the streaming game image, the one of the second images (Ds1 to Ds4) includes an image that represents the account associated with the one of the second images.

## Description

The present disclosure relates to a game device, a method, a program, and an information processing system.

### INTRODUCTION

A game system in Japanese Patent Laying-Open No. 2018-94208 generates a virtual lobby via the Internet and allows a plurality of users to enter the virtual lobby. The plurality of users who have entered the virtual lobby play a specific game together.

### SUMMARY

There is room for improvement in sharing game experiences among a plurality of users.

(Configuration 1) A game device according to one example embodiment is a game device with which a first account is associated, the game device being configured to communicate with another game device. The game device includes a stream transmitter configured to stream a streaming game image that is based on an image of a running game application to the another game device with which another account belonging to a group, in which the first account is joining, is associated, a receiver configured to receive a streaming game image from another game device with which the another account joining the group is associated, and an image generator. The image generator is configured to generate a first display image including a first image and a plurality of second images, the first image being based on an image of the game application running in the game device with which the first account is associated. Each of the plurality of second images is associated with respective different accounts among a plurality of accounts that belong to the group including the first account. While a game device with which an account associated with one of the second images is streaming the streaming game image, when the account associated with the one of the second images is the first account, the one of the second images includes an image based on the image of the running game application, and when the account associated with the one of the second images is the another account, the one of the second images includes the streaming game image received from the another game device with which the another account is associated. While the game device associated with the account associated with the one of the second images is not streaming the streaming game image, the one of the second images includes an image that represents the account associated with the one of the second images.

(Configuration 2) In the game device in Configuration 1, all accounts including the first account, that belong to the group and are associated with game devices that are streaming the streaming game images, are associated with the plurality of second images, respectively.

(Configuration 3) In the game device in Configuration 2, a predetermined number that is an upper limit of accounts which can be associated with the second images respectively is smaller than the number of accounts which can belong to the group.

(Configuration 4) In the game device in Configuration 3, when the number of accounts belonging to the group is equal to or smaller than the predetermined number, the image generator is configured to generate the first display image including second images as many as the number of accounts belonging to the group.

(Configuration 5) In the game device in Configuration 3 or 4, when the number of accounts belonging to the group is larger than the predetermined number, the image generator is configured to generate the first display image including the predetermined number of second images and a third image as many as a difference between the number of accounts belonging to the group and the predetermined number. The third image is associated with any of account not associated with the second images among the plurality of accounts belonging to the group and includes an image that represents the account associated with the third image.

(Configuration 6) In the game device in Configuration 5, when a predetermined condition is satisfied while the first account is associated with the third image, the predetermined condition including a condition that the another game device associated with the another account associated with a corresponding one of the second images is not streaming the streaming game image, streaming of the streaming game image is enabled.

(Configuration 7) In the game device in Configuration 6, when the account associated with the third image located at a second position in the first display image starts streaming of the streaming game image, the image generator is configured to generate the first display image in which the corresponding one of the second images with which the account is associated is located at a first position and a third image with which the account associated with the corresponding one of the second images that has been located at the first position till then is associated is located at the second position.

(Configuration 8) In the game device in Configuration 7, when the first account is associated with a corresponding one of the second images when the first account comes to belong to the group, the image generator is configured to generate the first display image in which the second image associated with the first account is located at a predetermined third position.

(Configuration 9) In the game device in any of Configurations 1 to 8, accounts belonging to the group includes an account that is joining the group, an account that has invited an another account to join the group, and an account that has been invited to join the group but has not joined the group.

(Configuration 10) In the game device in any of Configurations 1 to 9, the stream transmitter is configured to stream a streaming captured image based on an image captured by a camera to the another game device with which the another account belonging to the group is associated, the receiver is configured to receive the streaming captured image from the another game device with which the another account belonging to the group is associated, and while the game device with which the account associated with a corresponding one of the second images is associated is streaming the streaming captured image, the one of the second images includes the streaming captured image.

(Configuration 11) In the game device in Configuration 10, when a second image includes the streaming game image and the streaming captured image, the second image includes the streaming captured image smaller than when the second image includes the streaming captured image without including the streaming game image.

(Configuration 12) In the game device in Configuration 10, the first image does not include the streaming captured image.

(Configuration 13) In the game device in any of Configurations 1 to 12, the image generator is configured to generate the first display image that includes the second images, each of the second images including an image representing the account associated with the one of the second images, respectively, or the first display image where images representing the accounts associated with the second images is arranged near the one of the second images, respectively.

(Configuration 14) In the game device in Configuration 13, the stream transmitter is configured to stream a streaming sound based on audio input to another game device. The receiver is configured to receive the streaming sound from another game device. The image generator is configured to change a form of display or a position of the image representing the accounts associated with the one of the second images based on the streaming sound received from the game devices with which the account associated with the one of the second images are associated.

(Configuration 15) In the game device in any of Configurations 1 to 14, while the stream transmitter is streaming the streaming game image and while the first account is associated with anyone of the second images, the image generator is configured to generate the first display image including the one of the second images including an image based on the streaming game image.

(Configuration 16) In the game device in any of Configurations 1 to 15, the stream transmitter is configured to stream a first streaming game image and a second streaming game image higher in quality than the first streaming game image. The receiver is configured to receive at least either one of the first streaming game image and the second streaming game image from another game device.

(Configuration 17) In the game device in Configuration 16, the image generator is configured to generate, based on the second streaming game image, a second display image with which another account belonging to the group is associated, the second display image including one fourth image larger than any one of the second images.

(Configuration 18) In the game device in Configuration 16 or 17, when the image generator generates the first display image, the receiver is configured to receive the first streaming game image and not to receive the second streaming game image.

(Configuration 19) In the game device in any of Configurations 1 to 18, the image generator is configured to generate a third display image including a menu image that covers a part of the first image and includes the second images.

(Configuration 20) A method according to one embodiment is a method to be performed by a first game device with which a first account is associated. The method includes streaming a streaming game image that is based on an image of a running game application to another game device with which another account belonging to a group, in which the first account is joining, is associated, receiving a streaming game image from the another game device with which the another account joining the group is associated, and generating a first display image including a first image and a plurality of second images, the first image being based on an image of the game application running in the game device with which the first account is associated. Each of the plurality of second images is associated with different accounts among a plurality of accounts that belong to the group including the first account. While a game device with which an account associated with one of the second images is streaming the streaming game image, when the account associated with the one of the second images is the first account, the one of the second images includes an image based on the image of the running game application, and when the account associated with the one of the second images is the another account, the one of the second images includes the streaming game image received from the another game device with which the another account is associated. While the game device associated with the account associated with the one of the second images is not streaming the streaming game image, the one of the second images includes an image that represents the account associated with the one of the second images.

(Configuration 21) In the method in Configuration 20, a predetermined number that is an upper limit number of accounts associated with the second images is smaller than the number of accounts which can belong to the group. The method further includes generating the first display image including the second images as many as the number of accounts that belong to the group when the number of accounts belonging to the group is equal to or smaller than the predetermined number.

(Configuration 22) The method in Configuration 21 further includes generating the first display image including the predetermined number of second images and a third image as many as a difference between the number of accounts belonging to the group and the predetermined number when the number of accounts belonging to the group is larger than the predetermined number. The third image includes an image that is associated with an account not associated with the second images among the plurality of accounts belonging to the group and represents the account.

(Configuration 23) The method in any of Configurations 20 to 22 further includes streaming a streaming captured image based on an image captured by a camera to another game device with which another account belonging to the group is associated and receiving the streaming captured image from another game device with which another account belonging to the group is associated. While the game device with which the account associated with one of the second images is associated is streaming the streaming captured image, the one of the second images includes the streaming captured image.

(Configuration 24) The method in any of Configurations 20 to 23 further includes generating the first display image that includes the second images including images representing the accounts associated with the second images, respectively, or the first display image where images representing the accounts associated with the second images are arranged near the second images, respectively.

(Configuration 25) The method in Configuration 24 further includes streaming a streaming sound based on audio input to another game device with which another account belonging to the group is associated, receiving the streaming sound from another game device with which another account belonging to the group is associated, and changing a manner of display or positions of the images representing the accounts associated with the second images based on the streaming sound received from the game devices with which the accounts associated with the second images are associated.

(Configuration 26) The method in any of Configurations 20 to 25 further includes generating the first display image including the second images including an image based on the streamed streaming game image while the streaming game image is streamed and while the first account is associated with a corresponding one of the second images.

(Configuration 27) The method in any of Configurations 20 to 26 further includes streaming a first streaming game image and a second streaming game image higher in quality than the first streaming game image and receiving at least one of the first streaming game image and the second streaming game image from another game device.

(Configuration 28) The method in Configuration 27 further includes generating, based on the second streaming game image, a second display image with which another account belonging to the group is associated, the second display image including a single fourth image larger than a corresponding one of the second images.

(Configuration 29) The method in Configuration 27 or 28 further includes receiving the first streaming game image and not receiving the second streaming game image when the first display image is generated.

(Configuration 30) The method in any of Configurations 20 to 29 further includes generating a third display image including a menu image that covers a part of the first image and includes the second images.

(Configuration 31) A program according to one embodiment is a program causing a first game device with which a first account is associated. The program causes one or more processors to perform streaming a streaming game image that is based on an image of a running game application to another game device with which another account belonging to a group, in which the first account is joining, is associated, receiving a streaming game image from the another game device with which the another account joining the group is associated and generating a first display image including a first image and a plurality of second images, the first image being based on an image of the game application running in the game device with which the first account is associated. Each of the plurality of second images is associated with respective different accounts among a plurality of accounts that belong to the group including the first account. While a game device with which an account associated with one of the second images is streaming the streaming game image, when the account associated with the one of the second images is the first account, the one of the second images includes an image based on the image of the running game application, and when the account associated with the one of the second images is the another account, the one of the second images includes the streaming game image received from the another game device with which the another account is associated. While the game device associated with the account associated with the one of the second images is not streaming the streaming game image, the one of the second images includes an image that represents the account associated with the one of the second images.

(Configuration 32) In the program in Configuration 31, a predetermined number that is an upper limit number of accounts associated with the second images is smaller than the number of accounts which can belong to the group. The program further causes the one or more processors to perform generating the first display image including the second images as many as the number of accounts that belong to the group when the number of accounts belonging to the group is equal to or smaller than the predetermined number.

(Configuration 33) The program in Configuration 32 further causes the one or more processors to perform generating the first display image including the predetermined number of second images and a third image as many as a difference between the number of accounts belonging to the group and the predetermined number when the number of accounts belonging to the group is larger than the predetermined number. The third image includes an image that is associated with an account not associated with the second images among the plurality of accounts belonging to the group and represents the account.

(Configuration 34) The program in any of Configurations 31 to 33 further causes the one or more processors to perform streaming a streaming captured image based on an image captured by a camera to another game device with which another account belonging to the group is associated and receiving the streaming captured image from another game device with which another account belonging to the group is associated. While the game device with which the account associated with one of the second images is associated is streaming the streaming captured image, the one of the second images includes the streaming captured image.

(Configuration 35) The program in any of Configurations 31 to 34 further causes the one or more processors to perform generating the first display image that includes the second images including images representing the accounts associated with the second images, respectively, or the first display image where images representing the accounts associated with the second images are arranged near the second images, respectively.

(Configuration 36) The program in Configuration 35 further causes the one or more processors to perform streaming streaming sound based on audio input to another game device with which another account belonging to the group is associated, receiving the streaming sound from another game device with which another account belonging to the group is associated, and changing a manner of display or positions of the images representing the accounts associated with the second images based on the streaming sound received from the game devices with which the accounts associated with the second images are associated.

(Configuration 37) The program in any of Configurations 31 to 36 further causes the one or more processors to perform generating the first display image including the second images including an image based on the streamed streaming game image while the streaming game image is streamed and while the first account is associated with a corresponding one of the second images.

(Configuration 38) The program in any of Configurations 31 to 37 further causes the one or more processors to perform streaming a first streaming game image and a second streaming game image higher in quality than the first streaming game image and receiving at least one of the first streaming game image and the second streaming game image from another game device.

(Configuration 39) The program in Configuration 38 further causes the one or more processors to perform generating, based on the second streaming game image, a second display image with which another account belonging to the group is associated, the second display image including one fourth image larger than a corresponding one of the second images.

(Configuration 40) The program in Configuration 38 or 39 further causes the one or more processors to perform receiving the first streaming game image and not receiving the second streaming game image when the first display image is generated.

(Configuration 41) The program in any of Configurations 31 to 40 further causes the one or more processors to perform generating a third display image including a menu image that covers a part of the first image and includes the second images.

(Configuration 42) An information processing system according to one embodiment includes a transmitter configured to transmit information including a plurality of streaming game image based on an image of a game application running in each of a plurality of game devices with which a plurality of accounts in a group are associated, respectively, and a stream controller configured to manage streaming in the group. The stream controller is configured to transmit first information to the game devices, indicating accounts streaming the streaming game images among the group. Each one of the plurality of game devices includes a stream transmitter configured to stream an image of a game application being executed by the one of the game devices to another game device, a receiver configured to receive an image of a game application being executed by the another game device, and an image generator. The image generator is configured to generate a first display image including a first image and a plurality of second images, the first image showing the image of the game application being executed by the one of the game devices. The plurality of second images each associated with different accounts, including the account associated with the one of the game devices, among a plurality of accounts that belong to the group. While a game device with which an account associated with one of the second images is streaming the streaming game image, when the account associated with the one of the second images is the account associated with the one of the game devices, the one of the second images includes an image based on the image of the game application being executed by the one of the game devices, and when the account associated with the one of the second images is the another account, the one of the second images includes the streaming game image received from the another game device associated with the another account. While the game device associated with the account associated with which the with the one of the second images is not streaming the streaming game image, the one of the second images includes an image that represents the account associated with the one of the second images.

(Configuration 43) In the information processing system in Configuration 42, the stream controller is configured to control at most a predetermined number of game devices to be in a streaming enabled state, the predetermined number being smaller than an upper limit number of accounts that belong to the group.

(Configuration 44) In the information processing system in Configuration 42 or 43, the stream controller is configured to transmit second information indicating all accounts that belong to the group to each of the plurality of game devices.

(Configuration 45) In the information processing system in any of Configurations 42 to 44, the stream controller is configured to stream third information indicating that an account that is not currently performing streaming can perform streaming to the plurality of game devices. When the first game device starts streaming based on the third information, the stream controller is configured to associate the account of the first game device associated with a third image with one of the second images and to associate at least one of accounts that are associated with the one of the second images and are not performing streaming with the third image.

(Configuration 46) In the information processing system in Configuration 44 or Configuration 45 based on Configuration 44, the stream controller is configured to transmit the second information including account information of an account that has not joined the group.

(Configuration 47) In the information processing system in any of Configurations 42 to 46, the transmitter is configured to transmit streaming information including a streaming captured image based on an image captured by a camera to each of the plurality of game devices.

(Configuration 48) In the information processing system in any of Configurations 42 to 47, the transmitter is configured to transmit fourth information that causes the plurality of game devices to show images showing accounts to each of the plurality of game devices.

(Configuration 49) In the information processing system in any of Configurations 42 to 48, the transmitter is configured to transmit streaming sound based on audio input from a microphone to each of the plurality of game devices.

(Configuration 50) In the information processing system in any of Configurations 42 to 49, the stream controller is configured to receive from each of the plurality of game devices, fifth information indicating from which game device among the plurality of game devices data indicating a game application image high in quality is to be received.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a schematic diagram showing an exemplary information processing system according to the present embodiment.
Fig. 2 is a schematic diagram showing an exemplary hardware configuration of a management server included in the information processing system according to the present embodiment.
Fig. 3 is a schematic diagram showing an exemplary hardware configuration of a game device included in the information processing system according to the present embodiment.
Fig. 4 is a first diagram showing a timing chart for illustrating streaming among users.
Fig. 5 is a diagram showing an exemplary display image SdA of a game device 30A that is generated by game device 30A in step S106.
Fig. 6 is a diagram showing exemplary display image SdA of game device 30A after processing in step S107.
Fig. 7 is a diagram showing an exemplary display image SdB of a game device 30B that is generated by game device 30B in step S114.
Fig. 8 is a diagram showing exemplary display image SdB of game device 30B after processing in step S115.
Fig. 9 is a diagram showing exemplary display image SdA of game device 30A after processing in step S117.
Fig. 10 is a second diagram showing a timing chart for illustrating streaming among users.
Fig. 11 is a diagram showing an exemplary display image SdC of a game device 30C that is generated by game device 30C in step S203.
Fig. 12 is a diagram showing exemplary display image SdC of game device 30C after processing in step S210.
Fig. 13 is a diagram showing exemplary display image SdA of game device 30A after processing in step S212.
Fig. 14 is a diagram showing exemplary display image SdA of game device 30A after processing in step S214.
Fig. 15 is a third diagram showing a timing chart for illustrating streaming among users.
Fig. 16 is a diagram showing an exemplary display image SdE of a game device 30E that is generated by game device 30E in step S303.
Fig. 17 is a diagram showing an exemplary display image SdD of a game device 30D that is generated by game device 30D in step S308.
Fig. 18 is a diagram showing exemplary display image SdE of game device 30E after processing in step S311.
Fig. 19 is a diagram showing exemplary display image SdA of game device 30A after processing in step S311.
Fig. 20 is a diagram showing exemplary display image SdA of game device 30A after processing in step S313.
Fig. 21 is a diagram showing exemplary display image SdA of game device 30A after processing in step S315.
Fig. 22 is a diagram for illustrating an exemplary menu image.
Fig. 23 is a diagram showing exemplary display image SdA of game device 30A including guidance display.
Fig. 24 is a flowchart for illustrating, in terms of functions, processing for generation of a display image by game device 30.
Fig. 25 shows an exemplary display image where streaming images are shown as many as the number of accounts that are performing streaming.
Fig. 26 is a diagram for illustrating an exemplary enlarged streaming image in a second modification.

### DETAILED DESCRIPTION

The present embodiment will be described in detail with reference to the drawings. The same or corresponding elements in the drawings have the same reference characters allotted and description thereof will not be repeated.

### <Embodiment>

### [A. Overview]

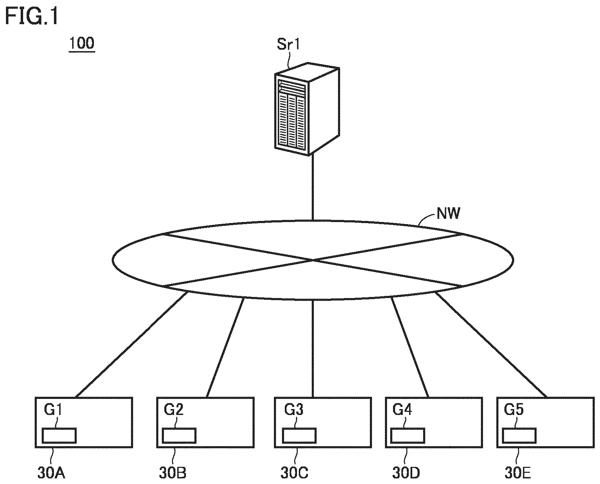

An exemplary configuration of an information processing system 100 according to the present embodiment will be described. Fig. 1 is a schematic diagram showing exemplary information processing system 100 according to the present embodiment. Information processing system 100 is a system in which at least one of game devices 30A to 30E can stream an image of a game application being executed to other game devices among game devices 30A to 30E.

In an example in Fig. 1, information processing system 100 includes game devices 30A to 30E and a management server Sr1. Game devices 30A to 30E and management server Sr1 are configured to be connectable to each other over a network NW. Network NW is, for example, the Internet.

Each of game devices 30A to 30E is, for example, an information processing apparatus exclusive for gaming. Each of game devices 30A to 30E may be a general-purpose information processing apparatus capable of executing games. Each of game devices 30A to 30E may be an information processing apparatus such as a smartphone, a tablet, or a general-purpose PC. The game devices may be information processing apparatuses different in type from one another. In the example in the present embodiment, game devices 30A, 30B, 30C, 30D, and 30E are capable of executing game applications G1, G2, G3, G4, and G5, respectively. Though not shown, game device 30C is capable of executing also game applications G6 and G7 in addition to game program G3.

Game devices 30A to 30E will collectively be referred to as a "game device 30" below. Game applications G1 to G5 will collectively be referred to as a "game application G." In the present embodiment, all or a part of game applications G may be the same game application or different game applications. Each of game devices 30 may be capable of executing a plurality of game applications G. Information processing system 100 in the present embodiment allows streaming of an image of game application G running in game device 30 that functions as a streaming terminal, among a plurality of game devices 30. Game device 30 may simultaneously execute a plurality of game applications G. At this time, a single game application or a plurality of game applications may be streamed.

Each game application G may be executable by being downloaded to each game device 30 or may be executable by each game device 30 by insertion of a recording medium having the game application recorded thereon in each game device 30. For example, each of game devices 30A to 30E can download a new game application from a not-shown app streaming server.

In the present embodiment, accounts A, B, C, D, and E are associated with game devices 30A, 30B, 30C, 30D, and 30E, respectively. Association between two elements encompasses indirect association, without being limited to direct association. A method of associating game device 30 and an account with each other is not limited. By way of example, as a result of creation of an account A in game device 30A by a user, game device 30A and account A are associated with each other. Creation of account A in game device 30A may be stored in a predetermined server over network NW. In another example, a user may create account A, for example, on an on-line service with the use of a general-purpose PC. Thereafter, by registration of game device 30A as a game device where account A is to be used with the use of the above-described or another on-line service or game device 30A, game device 30A and account A may be associated with each other. A plurality of accounts may be associated with a single game device 30. Alternatively, or in addition, a single account may be associated with a plurality of game devices 30. For example, when the user starts using game device 30A or when the user uses a specific function in game device 30A, the user may log in as account A. An account with which the user logs in when the user starts using game device 30A may be different from an account with which the user logs in when the user uses a specific function in game device 30A. When the user logs in as certain account A, for example, the user may select account A from among a plurality of accounts, or may enter a specific password or the like corresponding to account A. In yet another example, when the user uses game device 30A, the user may log in game device 30A as account A, without performing an operation.

In information processing system 100, as each of game devices 30A to 30E is connected to network NW, various services are provided to each of game devices 30A to 30E. In information processing system 100 in the present embodiment, a plurality of game devices 30 join a communication group. In the communication group, game devices 30 can stream images.

In the present embodiment, as an exemplary technique to form a communication group, a virtual room is provided. Information processing system 100 allows streaming of an image of game application G executed by game device 30 that functions as a streaming terminal among a plurality of game devices 30A with which accounts that have entered the virtual room are associated, to other game devices 30 with which accounts that have entered the virtual room are associated. Users who use the plurality of game devices 30 with which the accounts that have entered the virtual room are associated can share game experiences. Entry into the virtual room in the present embodiment is exemplary of joining the communication group. Hereinafter, entry of account A associated with game device 30A in the virtual room with the use of game device 30A may be referred to as "game device 30A that has entered the virtual room" or "account A that has entered the virtual room". The "virtual room" or "room entry" is merely an exemplary term to express a function.

In the example in the present embodiment, management server Sr1 relays data streamed among game devices 30. In one aspect, however, data may directly be transmitted or received by direct connection of each of game devices 30A to 30E. A method of streaming may be broadcast, multicast, unicast, or the like.

An image of game application G includes an image generated as a result of execution of game application G and is shown to a user while game application G is running.

In the present disclosure, game device 30 which streams an image of game application G is referred to as a "streaming terminal." The streaming terminal is a game device 30 that executes game application G and streams an image of that game application G. Hereinafter, game device 30 which receives the streamed image is referred to as a "reception terminal". The reception terminal is game device 30 that receives an image of game application G streamed by the streaming terminal.

In the present embodiment, game device 30 can function as the streaming terminal and simultaneously as the reception terminal. In other words, game device 30 can function as the streaming terminal to stream an image of game application G being executed to another game device 30 and simultaneously can function as the reception terminal to receive an image of game application G from another game device 30.

In the present embodiment, an image of game application G streamed from the streaming terminal to the reception terminal may be processed from an original image of game application G, such as an image shown when game device 30 alone is executing game application G. For example, the streaming terminal may perform image processing to change a bit rate, a frame rate, or a resolution of the original image of game application G. Alternatively, or in addition, the reception terminal may process the received image of game application G. The reception terminal may perform processing for superimposing a predetermined image on the received image of game application G. Alternatively, or in addition, for example, management server Sr1 may process the original image of game application G or the image of game application G processed by the streaming terminal.

Management server Sr1 manages streaming of the image of game application G among the plurality of game devices 30. There may be a single management server Sr1 or a plurality of management servers Sr1. When there are a plurality of management servers Sr1, a part and another part of processing for performing specific functions may be performed by different management servers Sr1. The server may be what is called a virtual server.

Management server Sr1 generates the virtual room based on reception of a request for generation of the virtual room from game device 30. Game device 30 enters the generated virtual room. "Entry into the virtual room" means setting of a state of game device 30 to a state in which at least one of streaming or reception is enabled between game device 30 and another game device that has entered the same virtual room. Game device 30 that has issued the request for generation of the virtual room does not have to automatically enter the virtual room. The request for generation of the virtual room may be generated with the use of a general-purpose PC or the like, rather than game device 30.

Management server Sr1 holds room information representing a state of the virtual room and manages the virtual room. The room information includes information for identification of an account that has not yet entered the virtual room, information for identification of an account that is in the virtual room, information for identification of an account in an image streaming state, or the like by way of example.

Game device 30 can invite an account associated with another game device 30 in order to encourage another game device 30 to enter the virtual room. "Being invited" means a state in which invited game device 30 has not yet entered the virtual room. The state "being invited" may also be referred to as "not yet having entered the room" below. Invited game device 30 may enter the virtual room earlier than game device 30 that has issued an invitation. In other words, game device 30 that has issued the invitation may be in a state of not yet having entered the room.

Information processing system 100 in the present embodiment starts streaming by causing the state of game device 30 being in the virtual room to make transition from a non-image-streaming state to the image streaming state. The "image streaming state" in the present embodiment means a state in which game device 30 is functioning as the streaming terminal and a state in which game device 30 streams an image of running game application G or an image captured by a camera to another game device (reception terminal) being in the virtual room. As will be described later, in the present embodiment, an upper limit number (streaming upper limit number) of game devices 30 which can make transition to the image streaming state in one virtual room is set.

For example, a user who uses account A may simply be referred to as "account A" below. For example, the user selects account A when the user uses a communication function.

In the present embodiment, the upper limit number (room entry upper limit number) of game devices 30 which can enter the virtual room is set in advance. The room entry upper limit number in the present embodiment is set to twelve. The room entry upper limit number may be set, for example, to four, five, or more than one hundred. In another example, the user may or may not designate the room entry upper limit number. In yet another example, room entry upper limit numbers different between game device 30 that satisfies a predetermined condition and game device 30 that does not satisfy the predetermined condition may be set for one virtual room.

In the present embodiment, the upper limit number (streaming upper limit number) of game devices 30 which can function as the streaming terminals is set in advance. The streaming upper limit number in the present embodiment is set to four. In the present embodiment, the streaming upper limit number is smaller than the room entry upper limit number. The streaming upper limit number is not limited. For example, the streaming upper limit number may be set to one or as many as the room entry upper limit number. In another example, the user may designate the streaming upper limit number.

In the present embodiment, in an example where all of game devices 30A to 30E enter the virtual room, four of game devices 30A to 30E can stream game application G. For example, all users who operate respective game devices 30A to 30E can watch the streams by four game devices 30 in the image streaming state. When game device 30A is in the image streaming state as will be described later, the user of game device 30A can substantially watch also streaming by game device 30A itself.

An example of streaming between game device 30A associated with account A and game device 30B associated with account B will be described as a specific example of streaming below. Game device 30A and game device 30B are in the same virtual room.

Game device 30A requests management server Sr1 that game device 30A make transition to the image streaming state. When the number of game devices 30 in the image streaming state is smaller than the streaming upper limit number in the virtual room, management server Sr1 may allow game device 30A to make transition to the image streaming state. Game device 30A thus makes transition to the image streaming state in which the image of running game application G1 is streamed to game device 30B. Game device 30B similarly requests management server Sr1 that game device 30B make transition to the image streaming state, so that it can make transition to the image streaming state. Game device 30A shows an image of game application G1 running therein and an image of game application G2 running in game device 30B to the user who uses game device 30A. This is also applicable to game device 30B.

Exemplary streaming will further be described with reference to another example. In the virtual room, game devices 30A, 30B, 30C, and 30D function as the streaming terminals and the reception terminals and only game device 30E alone functions only as the reception terminal, not as the streaming terminal. In this case, while each of game devices 30A to 30D streams the image of game application G executed thereby, it receives images of game applications G executed by game devices 30A to 30D except for itself. Game device 30E, on the other hand, does not perform streaming but receives images of game applications G executed by game devices 30A to 30D.

In each example above, while each game device 30 watches streaming by other users, it can execute game application G therein. While the user who operates game device 30 executes game application G for the purpose of play by the user himself/herself, the user can watch images of game applications G played by other users.

### [B. Exemplary Hardware Configuration]

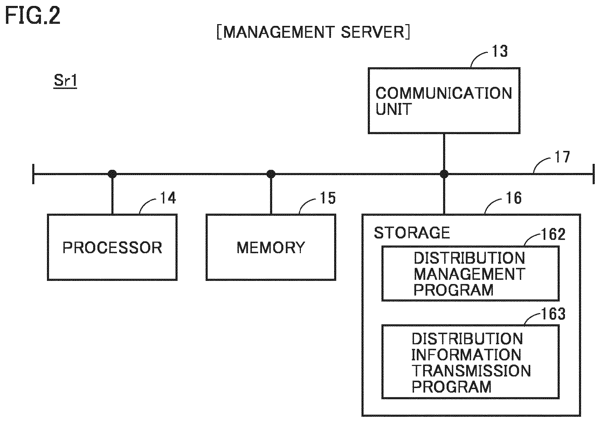

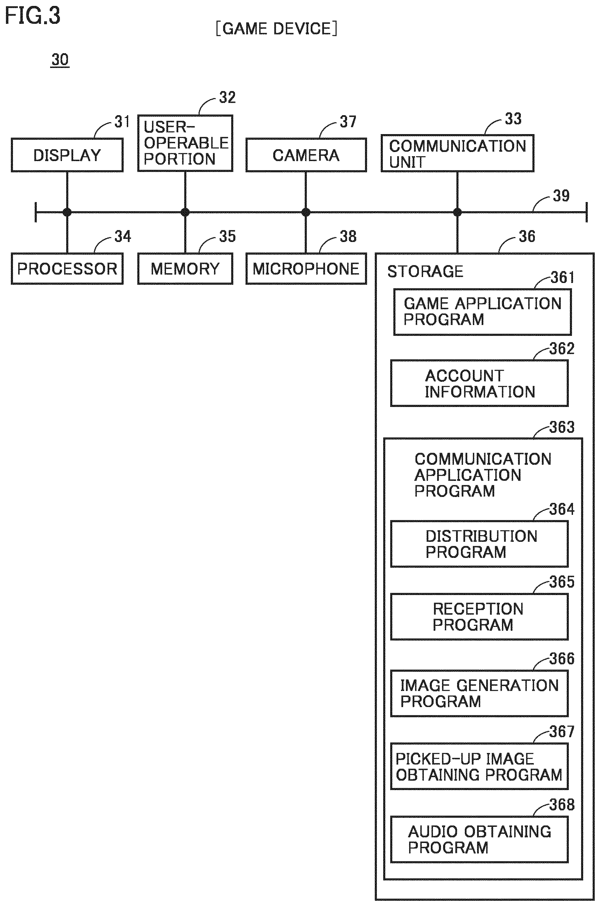

An exemplary hardware configuration of management server Sr1 and game device 30 included in information processing system 100 according to the present embodiment will be described below with reference to Figs. 2 and 3.

Fig. 2 is a schematic diagram showing an exemplary hardware configuration of management server Sr1 included in information processing system 100 according to the present embodiment. Referring to Fig. 2, management server Sr1 includes one or more processors 14, a volatile memory 15, a storage 16, and a communication unit 13. These components are connected to communicate data with one another through a bus 17. Management server Sr1 may be a dedicated information processing apparatus configured to manage the streaming terminal and the reception terminal or may be implemented by a general-purpose server.

Communication unit 13 communicates with game device 30 over network NW. Communication unit 13 is provided with hardware necessary for wired communication and hardware necessary for wireless communication. The entirety or a part of processing by communication unit 13 may be performed by processor 14.

Processor 14 is a processing entity (processing means) for performing processing provided by management server Sr1. The term "processor" in the present disclosure means processing circuitry such as a central processing unit (CPU), a micro processing unit (MPU), or a graphics processing unit (GPU). The term "processor" encompasses processing circuitry that performs processing in accordance with instruction codes described in a program, processing circuitry in which a plurality of functions are integrated, such as a system on chip (SoC), hard-wired circuitry, and the like.

Memory 15 is a volatile storage device (storage medium) accessible by processor 14, and for example, a dynamic random access memory (DRAM), a static random access memory (SRAM), or the like may be employed as memory 15. Storage 16 is a non-volatile storage device (storage medium) accessible by processor 14, and for example, a hard disk, a flash memory, or the like may be employed as storage 16. Storage 16 may be, for example, a storage medium attachable to and removable from management server Sr1, such as an optical disc and a cartridge.

A streaming management program 162 and a streaming information transmission program 163 and a not-shown system program to be executed by processor 14 are stored in storage 16. Processor 14 reads streaming management program 162 and streaming information transmission program 163 as well as the system program and develops and executes the same on memory 15. The system program is a program for causing management server Sr1 to operate, and includes, for example, an operating system (OS) and firmware. The term "memory" herein encompasses at least memory 15 and storage 16, and whether or not the memory is volatile or non-volatile does not matter.

Distribution management program 162 is a program for update of room information which will be described later to manage the user in the virtual room. Distribution information transmission program 163 is a program for transmission of streaming information received from the streaming terminal to the reception terminal.

Distribution management program 162, streaming information transmission program 163, and the system program each include an instruction code for performing various types of processing. The "program" that implements processing according to the present embodiment encompasses an instruction code of an application program included in each of streaming management program 162, streaming information transmission program 163, and the system program.

Fig. 3 is a schematic diagram showing an exemplary hardware configuration of game device 30 included in information processing system 100 according to the present embodiment. Game device 30 includes a display 31, a user-operable portion 32, a communication unit 33, a processor 34, a memory 35, a storage 36, a camera 37, a microphone 38, and a bus 39.

Display 31 shows an image generated as a result of information processing performed by processor 34. In the present embodiment, display 31 shows an image of game application G running in a terminal to which it belongs and an image of game application G streamed from a streaming terminal different from the terminal to which it belongs. In the present embodiment, display 31 may be a single display or include a plurality of displays. User-operable portion 32 accepts an operation by the user who operates game device 30. User-operable portion 32 may include, for example, a game controller, a touch panel, a mouse, a keyboard, and/or the like.

Components included in game device 30 are connected to communicate data with one another through bus 39. As in management server Sr1, a not-shown system program is included in storage 36. The system program in game device 30 is a program for causing game device 30 to operate, and includes, for example, an OS and firmware.

Game device 30 includes a not-shown speaker in addition to microphone 38 and camera 37. Information processing system 100 can allow communication among users by a video chat or the like among users who have entered the virtual room, with microphone 38, camera 37, and the not-shown speaker. In one aspect, a type of communication among users may be communication or the like by a voice chat or a text chat, or with the use of a haptic sharing device. In the virtual room, the user can transmit and receive an image different from the image of game application G, moving pictures, stamps, or the like.

Components such as display 31, user-operable portion 32, microphone 38, camera 37, and the speaker may be removable from a main body of game device 30. In other words, for example, at least one of display 31, user-operable portion 32, microphone 38, camera 37, and the speaker may be another apparatus connectable to game device 30 through a wire or wirelessly.

A game application program 361, account information 362, and a communication application program 363 are stored in storage 36. Game application program 361 is a program for execution of game application G and different for each game application G.

As described above, game application program 361 may be, for example, downloaded from a not-shown app streaming server to game device 30 or may be read from a separate storage medium. Account information 362 is information indicating an account associated with game device 30. As described above, account information 362 may include information indicating account(s) of one or more users.

Communication application program 363 is a program for streaming/reception in a communication group. A communication application started up by execution of communication application program 363 may be referred to as a chat application C1 below. In the present embodiment, communication application program 363 includes a streaming program 364, a reception program 365, an image generation program 366, a captured image obtaining program 367, and an audio obtaining program 368.

Distribution program 364 is a program for transmission of streaming information relating to streaming to management server Sr1. The streaming information includes an image of running game application G. The streaming information in the present embodiment may also include a streaming captured image based on an image captured by camera 37, streaming sound based on sound collected by microphone 38, or the like.

Reception program 365 is a program for reception of the streaming information streamed from another game device 30 through management server Sr1. Image generation program 366 is a program for generation of an image relating to streaming, that is to be shown on display 31. Captured image obtaining program 367 is a program for obtaining an image captured by camera 37. Audio obtaining program 368 is a program for obtaining sound collected by microphone 38.

### [C. Exemplary Distribution in Virtual Room]

Exemplary streaming in the virtual room in information processing system 100 in the present embodiment will be described below.

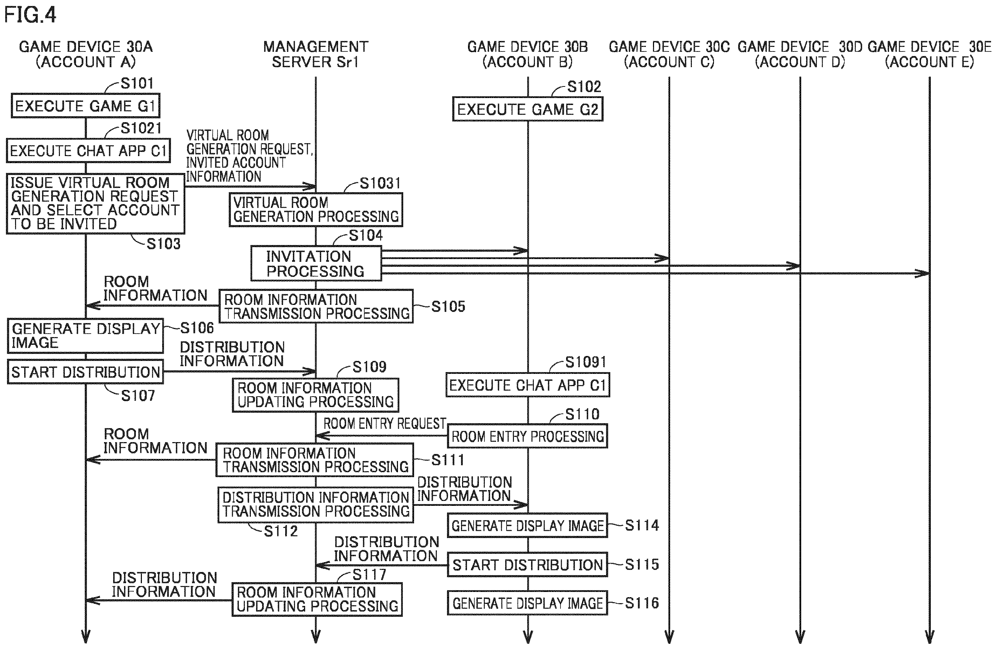

Fig. 4 is a first diagram showing a timing chart for illustrating streaming among users. Fig. 4 illustrates an example in which the virtual room is generated in accordance with an instruction from account A and accounts B to E are invited to the virtual room. Fig. 4 shows operations by game devices 30A to 30E and management server Sr1 in a time-series manner.

Game device 30A starts execution of game application G1 (step S101). Game device 30B starts execution of game application G2 (step S102). Timing of execution of game application G is not limited to timing before execution of chat application C, and game application G may be executed after chat application C is executed. Game application G may be executed at any timing, and may be executed, for example, at timing of reception of an instruction to start streaming of the running game application (steps S107 and S115).

Game device 30A starts execution of chat application C1 (S1021). At this time, game device 30A may encourage the user to select an account (selection of account A in the present embodiment). Game device 30A may encourage the user to select an account when it is started up.

Game device 30A issues a virtual room generation request to management server Sr1 (step S103). In the present embodiment, in step S103, game device 30A selects accounts B, C, D, and E associated with game devices 30B, 30C, 30D, and 30E, respectively, as accounts to be invited to the virtual room. Game device 30A transmits invited account information for identification of selected accounts B to E to management server Sr1.

Management server Sr1 performs virtual room generation processing based on obtainment of a virtual room generation request from game device 30A (step S1031). Management server Sr1 performs invitation processing for transmitting information indicating invitation to the virtual room to game devices 30B to 30E based on obtainment of the invited account information (step S104). Management server Sr1 transmits room information relating to the virtual room to game device 30A (step S105). The room information may include not only information for identification of the virtual room but also information on an account being in the room, an account that has not yet entered the room, which account is in the image streaming state, or the like.

As will be described later, management server Sr1 updates information indicating which game device 30 is in the image streaming state and included in the room information, by performing room information updating processing. In the present embodiment, at this time, when the number of game devices 30 in the image streaming state in the virtual room has not reached the streaming upper limit number, management server Sr1 transmits information indicating permission of streaming, as being incorporated in the room information, to game device 30 which is not in the image streaming state. The information indicating permission of streaming may be transmitted separately, without being incorporated in the room information, or may be transmitted in response to a request from game device 30 to start streaming. For example, when streaming is enabled, nothing may be transmitted, and when the number of game devices 30 in the image streaming state in the virtual room reaches the streaming upper limit number, information indicating that streaming is not enabled may be transmitted.

Game device 30A generates a display image to be shown on display 31, based on the room information received in step S105 (step S106). Processing in step S106 is performed by execution of image generation program 366 by game device 30A. After game device 30A generates the display image in step S106, it updates the display image to be shown on display 31 based on information or the like obtained from management server Sr1.

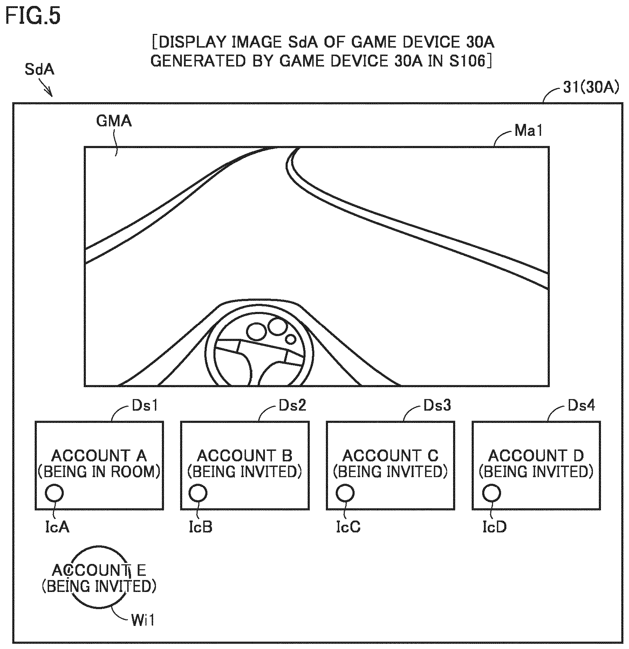

Fig. 5 is a diagram showing an exemplary display image SdA of game device 30A that is generated by game device 30A in step S106. Fig. 5 shows display image SdA that is shown on display 31 of game device 30A. Display image SdA is an image including a main image Ma1, streaming images Ds1 to Ds4, and a watch icon Wi1.

Main image Ma1 is an image for the user to play game application G, which is to be shown on display 31. Main image Ma1 occupies a relatively large area in display image SdA. Game device 30A has already started execution of game application G1 in step S101. Therefore, a game image GMA of game application G1 is shown in main image Ma1 in Fig. 5.

Each of streaming images Ds1 to Ds4, on the other hand, is an image for showing an image of game application G running in game device 30 in the image streaming state in the virtual room. In the present embodiment, streaming images Ds1 to Ds4 as many as the streaming upper limit number (four in the present embodiment) set for the virtual room are provided. In other words, since the streaming upper limit number is set to four, four streaming images Ds1 to Ds4 are shown, although five game devices 30 have joined the virtual room. In the present embodiment, streaming images Ds1 to Ds4 are shown before each game device 30 enters the image streaming state. As the streaming upper limit number is set, excessive communication load can be suppressed. Display image SdA includes streaming images Ds as many as the streaming upper limit number. Therefore, for example, a selection operation, a scroll operation, or the like for selecting a streaming image of which game device 30 should be shown as streaming image Ds, which may be necessitated, for example, when the streaming upper limit number (or the number of game devices in the actual image streaming state) is larger than the number of streaming images Ds, does not have to be performed. As streaming images Ds as many as the streaming upper limit number are shown before the number of game devices 30 actually in the image streaming state reaches the streaming upper limit number, the user can readily know the number of streaming images Ds that have not yet been used for streaming. Distribution images Ds1 to Ds4 may collectively be referred to as a "streaming image Ds" below.

In the present embodiment, in display image SdA, each of streaming images Ds1 to Ds4 occupies an area smaller than main image Ma1. Distribution images Ds1 to Ds4 are equal to one another in size. Distribution images Ds1 to Ds4 are aligned from the left to the right, below main image Ma1. Accounts are associated with respective streaming images Ds1 to Ds4. In the example of display image SdA generated in step S106, accounts A, B, C, and D are associated with respective streaming image Ds1, Ds2, Ds3, and Ds4. In the present embodiment, game devices 30 are identical to one another in layout of main image Ma1 and streaming images Ds1 to Ds4. Association of accounts with streaming images Ds1 to Ds4 may be different for each game device 30.

At a time point of step S106, in the virtual room, none of accounts A to E is performing streaming. Therefore, in each of streaming images Ds1 to Ds4, an image of game application G is not included but information indicating the associated account is shown. Specifically, in streaming images Ds1 to Ds4, information indicating an account name and an icon image Ic representing the account are shown. By way of example, icon images IcA to IcE show accounts A to E, respectively. Instead thereof or in addition thereto, the information indicating the account may include another type of information. Distribution images Ds1 to Ds4 may each include information indicating a state of the associated account. By way of example, the streaming image may include information indicating whether an account is in the room or has not yet entered the room (for example, being invited) or information indicating whether or not mute has been set.

A state such as whether the account is in the room or has been invited may be indicated, for example, by change in manner of display of streaming image Ds, instead of or in addition to characters. For example, when an account has been invited, the entire streaming image Ds or watch icon Wi or an account name may be shown lighter or darker. Alternatively, or in addition, when the account is in the room, a frame may be added to streaming image Ds or a color of the frame may be changed.

In the example in the present embodiment, though icon images IcA to IcD are included in respective streaming images Ds1 to Ds4, positions of display of icon images IcA to IcD should only allow recognition of association between icon images IcA to IcD and streaming images Ds1 to Ds4, respectively, and the icon images may be shown outside respective streaming images Ds1 to Ds4. For example, icon images IcA to IcD may be arranged in the vicinity of streaming images Ds1 to Ds4, respectively. Icon images IcA to IcD may collectively be referred to as an "icon image Ic." Icon image Ic or a name of each account may be obtained from each game device 30 with which communication is established, may be obtained from management server Sr1, or may be held in advance in each game device 30 that generates the display image.

Since only account A is in the room at the time point of step S106, streaming image Ds1 with which account A is associated may include the characters "being in room." Distribution images Ds2 to Ds4 associated with accounts B to D, respectively, on the other hand, may include the characters "being invited."

The characters "being invited" mean that the associated account has not yet entered the virtual room. An account being in the virtual room and an account that has not yet entered the room may be associated with each of streaming images Ds1 to Ds4.

An account different from accounts associated with streaming images Ds1 to Ds4 is associated with watch icon Wi1. An account being in the virtual room and an account that has not yet entered the room may be associated with watch icon Wi1, similarly to streaming images Ds1 to Ds4. In the example in Fig. 5, account E is associated with watch icon Wi1.

Fig. 5 shows a single watch icon Wi1. The number of watch icons Wi1 is determined based on the number of participants in the virtual room (including an account being in the room and an account that has not yet entered the room) and the streaming upper limit number. Specifically, watch icons Wi1 as many as a difference calculated by subtracting the streaming upper limit number from the number of participants are provided. Since the number of participants is five and the streaming upper limit number is four at the time point of step S106, Fig. 5 shows a single watch icon Wi1. If the number of participants is seven, three watch icons Wi1, Wi2, and Wi3 are provided. A plurality of watch icons Wi1, Wi2, and Wi3 shown on display 31 may collectively be referred to as a "watch icon Wi."

Watch icon Wi1 may include information indicating a name of an associated account, information indicating whether or not the account is being in the room, and an icon image associated with the account. Such information may be shown by characters or the like in the vicinity of watch icon Wi1 or by a manner of display of an account image. For example, icon image IcE may be shown as watch icon Wi1, and information indicating the name of the account or information indicating whether or not the account is being in the room may be shown as being superimposed on icon image IcE. Watch icon Wi1 occupies an area smaller than each of streaming images Ds1 to Ds4 on display 31. Watch icons Wi may be shown as being aligned from the left to the right, below streaming images Ds1 to Ds4.

In the present embodiment, when the number of game devices 30 in the image streaming state has not reached the streaming upper limit number at the time when game device 30 enters the virtual room, game device 30 associates its own account with streaming image Ds (Ds1 in the present embodiment) shown at a leftmost position. In the example in Fig. 5, since there is no account that is performing streaming at the time when game device 30A enters the virtual room, account A is associated with streaming image Ds1.

In the example in Fig. 5, game device 30A associates accounts B to D with streaming images Ds2 to Ds4, in the order of selection as an account invited to the virtual room. Game device 30A associates account E with watch icon Wi1.

Thus, in the present embodiment, display image SdA including main image Ma1, streaming images Ds1 to Ds4, and watch icon Wi1 is shown on display 31 of game device 30A that has entered the virtual room. As will be described later, contents of main image Ma1, accounts associated with streaming images Ds1 to Ds4 and watch icon Wi1, or the like may be different for each game device 30 that has entered the virtual room.

The user as account A watches display image SdA shown in Fig. 5 and can know that there is no account that is performing streaming in the virtual room, inclusive of the user himself/herself, because the image of game application G is not shown in streaming images Ds1 to Ds4. The user as account A can play game application G1 while the user watches main image Ma1.

Referring back to Fig. 4, game device 30A starts streaming of the image of running game application G1 (step S107). Processing in step S107 is performed by execution of streaming program 364 by game device 30A. Processing in step S107 is performed by reception by game device 30A, of an instruction to start streaming from the user through user-operable portion 32.

In response, game device 30A transmits the streaming information to management server Sr1. The streaming information includes a streaming game image GiA including the image of running game application G1. In the example in Fig. 4, in step S107, as streaming of the image of running game application G1 is started, the user of game device 30A streams streaming sound based on sound collected by microphone 38 and a streaming captured image based on a captured image captured by camera 37. With this streaming, game device 30A transmits the streaming sound and the streaming captured image to management server Sr1. In other words, the streaming information may include at least one of streaming game image GiA, the streaming sound, and the streaming captured image. The streaming information does not have to include at least one of them. "Being included in the streaming information" does not necessarily mean transmission of such data altogether, and the data may be transmitted separately. Game device 30A executes audio obtaining program 368 to obtain, for example, voice emitted from the user who uses game device 30A. Game device 30A executes captured image obtaining program 367 to obtain, for example, an image resulting from image capture of an appearance of the user who uses game device 30A.

As described above, the "image streaming state" in the present embodiment means a state of streaming of a streaming game image or a streaming captured image. In the present embodiment, on the other hand, the "streaming information" may include streaming sound, and game device 30 may be able to to transmit the streaming information including streaming sound even when it is not in a streaming state.

After start of streaming in step S107, game device 30A keeps transmitting to management server Sr1, streaming game image GiA based on the image of running game application G1 to be shown on display 31 thereof. In other words, game device 30A transmits a status of execution of game application G1 as moving image data. Similarly, after start of streaming in step S107, game device 30A keeps transmitting to management server Sr1, streaming sound based on sound collected by microphone 38 and the streaming captured image based on the captured image captured by camera 37.

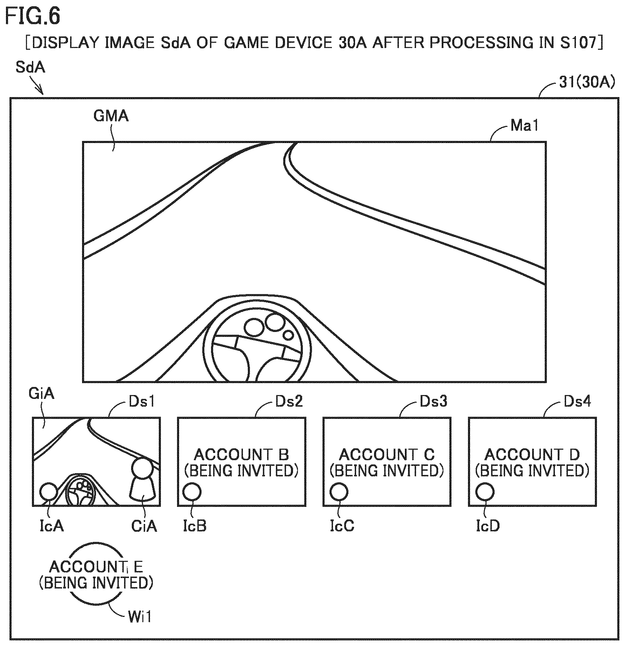

Fig. 6 is a diagram showing exemplary display image SdA of game device 30A after processing in step S107. In Fig. 6, contents of streaming image Ds1 have changed as compared with Fig. 5. In Fig. 6, streaming image Ds1 includes streaming game image GiA. As will be described later, streaming image Ds1 includes a streaming captured image CiA. Distribution image Ds1 still includes icon image IcA.

Thus, in information processing system 100 in the present embodiment, before start of streaming, the image of running game application G1 is included as game image GMA only in main image Ma1. After start of streaming, on the other hand, the image of running game application G1 is included also in one of streaming images Ds1 to Ds4 showing the status of streaming in the virtual room, in addition to main image Ma1. The user as account A can thus readily know whether or not game device 30 operated thereby is in the image streaming state, by checking whether or not streaming images Ds1 to Ds4 show contents the same as contents of main image Ma1. In other words, information processing system 100 in the present embodiment can allow the user to readily know whether or not the user himself/herself is performing streaming. In the present embodiment, since the image of running game application G1 is shown in streaming image Ds1 at the left end, the user can readily know whether or not the user himself/herself is performing streaming.

In the present embodiment, streaming game image GiA showing running game application G1 included in the streaming information is lower in quality than game image GMA showing running game application G1 in main image Ma1. Low image quality means that at least one of the resolution, the bit rate, and the frame rate of an image is relatively lower than that of game image GMA shown in main image Ma1. In information processing system 100 in the present embodiment, loads imposed by communication processing can be lessened by transmission of an image lower in quality than game image GMA shown in main image Ma1.

Distribution game image GiA showing running game application G1 included in streaming image Ds1 is the same in quality as the image of game application G1 included in the streaming information. Game device 30A can thus share the image of game application G1 to be included in the streaming information and the image of game application G1 to be shown in streaming image Ds1, and processing loads can be lessened. For "sharing", exactly the same image does not have to be used, and appropriate processing may be performed in generation of one image from another image. The user is supposed to play a game while the user watches main image Ma1 larger than streaming image Ds1. By lowering quality of streaming game image GiA shown in streaming image Ds1, processing capability can be saved.

As shown in Fig. 6, streaming captured image CiA in addition to icon image IcA is superimposed on streaming game image GiA included in streaming image Ds1. Distribution captured image CiA is an image based on an appearance of the user as account A. In the embodiment, game device 30A executes captured image obtaining program 367 and obtains the image captured by camera 37 based on permission of streaming of the captured image by the user after start of streaming in step S107.

Camera 37 may be arranged by the user such that the user who operates game device 30A is within a range of image capture by camera 37. Distribution captured image CiA shown in Fig. 6 is an image based on the captured image captured by camera 37. By way of example, streaming captured image CiA is an image obtained by cutout of a portion corresponding to the user from the captured image captured by camera 37. For example, streaming captured image CiA may be an avatar a manner of display of which changes by motion or a facial expression of the user, instead of the user. When streaming of the captured image is not enabled, streaming captured image CiA is not shown. An image showing that the captured image is not being streamed may be shown.

Referring back to Fig. 4, management server Sr1 performs room information updating processing based on reception of the streaming information including the image of running game application G or the image captured by the camera from game device 30A (step S109). Management server Sr1 updates the room information indicating game device 30 in the image streaming state, based on from which game device 30 it has received the streaming information including the image of running game application G or the image captured by the camera. Processing in step S109 is performed by execution of streaming management program 162 by management server Sr1. In step S109, management server Sr1 stores entry of game device 30A into the image streaming state in order to manage the account in the image streaming state. For example, management server Sr1 may update the room information and give game device 30 an answer that game device 30 may transmit the streaming information, upon a request to start streaming of the image from game device 30.

Game device 30B executes chat application C1 (step S1091). Thereafter, game device 30B performs room entry processing (step S110). The room entry processing is processing for entry of the invited account into the virtual room which game device 30B is invited to enter. Processing in step S110 is started by reception by game device 30B, of an instruction to enter the virtual room from the user through user-operable portion 32. In step S110, game device 30B issues a room entry request to management server Sr1.

Management server Sr1 performs transmission processing for updating the room information and transmitting the updated room information to game device 30A based on reception of the room entry request from game device 30B (step S111). When the room information is updated, the updated room information may be transmitted to all game devices 30 being in the room or all game devices 30 including also game device 30 that has not yet entered the room. Management server Sr1 transmits the room information including entry of game device 30B into the virtual room. Management server Sr1 transmits the streaming information streamed by game device 30A to game device 30B based on reception of the room entry request from game device 30B (step S112). Game device 30B executes reception program 365 to receive the streaming information from management server Sr1. Management server Sr1 keeps performing processing for transmitting the streaming information from game device 30A to game device 30B in step S112 or later.

Game device 30A updates display image SdA based on the updated room information. For example, the characters "being invited" in streaming image Ds2 shown in Fig. 6 are changed to "being in room" (not shown).

Game device 30B executes image generation program 366 to generate a display image SdB based on the streaming information from game device 30A (step S114).

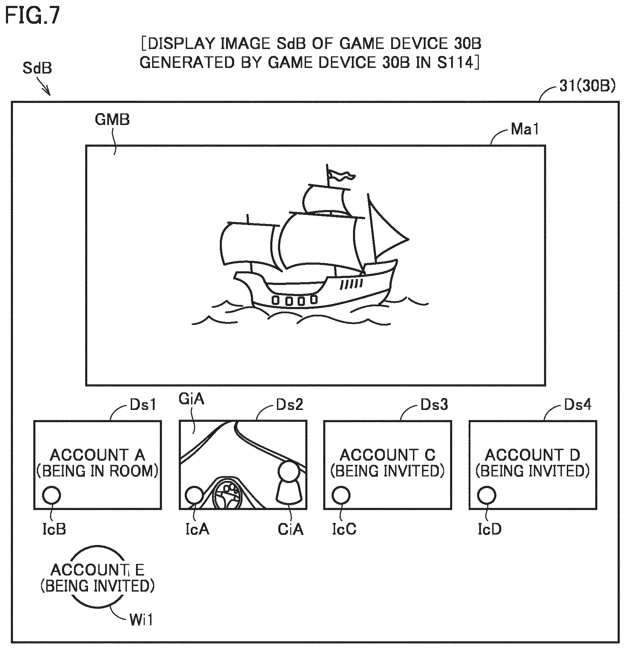

Fig. 7 is a diagram showing exemplary display image SdB of game device 30B that is generated by game device 30B in step S114. As shown in Fig. 7, display image SdB is similar in layout of main image Ma1, streaming images Ds1 to Ds4, and watch icon Wi1 to display image SdA.

In the example in Fig. 7, the number of accounts that are performing streaming has not reached the streaming upper limit number at the time of entry of game device 30B into the virtual room, and hence, in display image SdB, game device 30B associates account B with streaming image Ds1 shown at the leftmost position.

Since game device 30B has not yet started streaming, information indicating account B is shown in streaming image Ds1 shown in Fig. 7. Game device 30 associates the account associated therewith with streaming image Ds1, and associates another account that is performing streaming preferentially with the streaming image from the left among Ds2 to Ds4 in the virtual room. Since game device 30A is in the image streaming state, game device 30B associates account A with streaming image Ds2 adjacent on the right to streaming image Ds1, and streaming game image GiA, streaming captured image CiA, and icon image IcA are shown as contents of streaming image Ds2. The user as account B can thus watch an image or the like of game application G1 executed by the user as account A. Game device 30B associates accounts C and D and account E with streaming images Ds3 and Ds4 and watch icon Wi1, respectively.

Referring back to Fig. 4, game device 30B starts streaming of an image of running game application G2 (step S115). In the present embodiment, at this time, account B allows streaming of the captured image and sound.

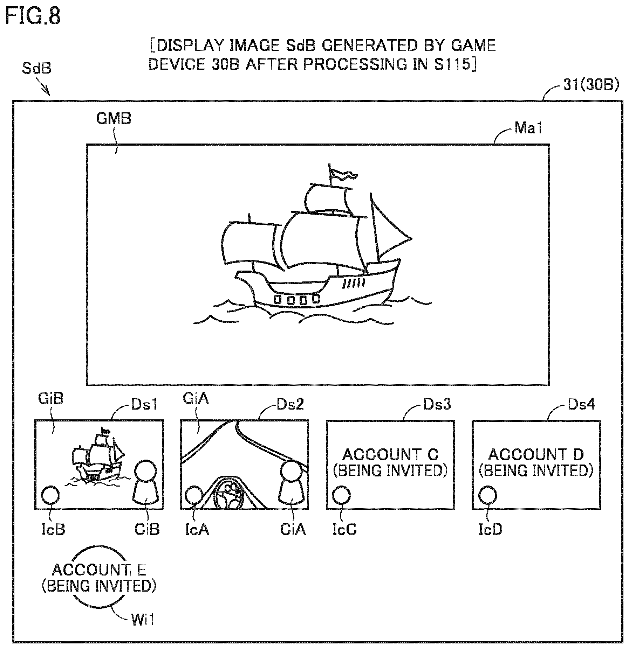

Fig. 8 is a diagram showing exemplary display image SdB of game device 30B after processing in step S115. In Fig. 8, an image shown in streaming image Ds1 has changed as compared with Fig. 7. Distribution image Ds1 includes a game image GiB showing the image of game application G2 executed by game device 30B. In streaming image Ds1, a streaming captured image CiB and an icon image IcB are superimposed on the image of streaming game image GiB.

Referring back to Fig. 4, in step S117, management server Sr1 performs the room information updating processing to store the fact that game device 30B in addition to game device 30A has entered the image streaming state.

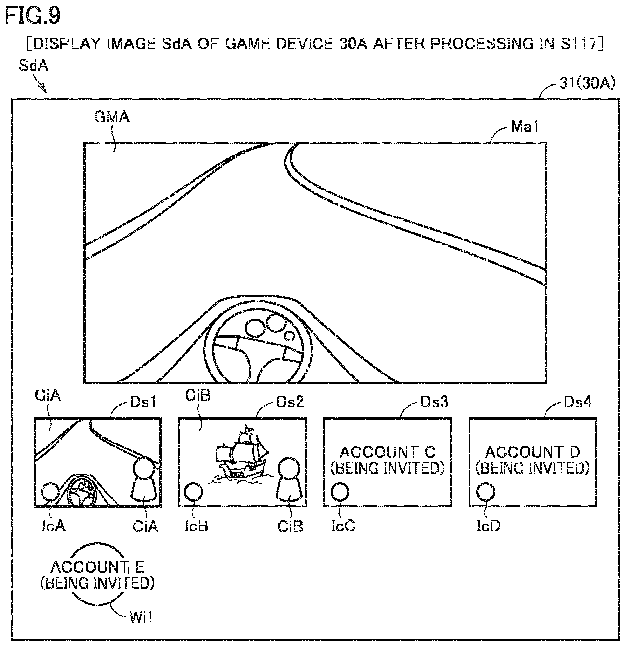

Management server Sr1 transmits the streaming information from game device 30B in the image streaming state to game device 30A. In step S117 or later, management server Sr1 keeps performing processing for transmitting the streaming information from game device 30B to game device 30A. Game device 30A updates display image SdA based on the streaming information from game device 30B. Fig. 9 is a diagram showing exemplary display image SdA of game device 30A after processing in step S117. In Fig. 9, the image shown in streaming image Ds2 has changed as compared with Fig. 6. Distribution image Ds2 includes streaming game image GiB, icon image IcB, and streaming captured image CiB. In addition, game device 30A reproduces streaming sound included in the streaming information from game device 30B. Accounts A and B can thus talk with each other.

As shown in Figs. 8 and 9, the user as account A and the user as account B can share the images of game applications G with each other. Communication by using voice or the camera can also be established.

In the present embodiment, when game device 30 receives streaming sound from another game device 30, it changes the manner of display of icon image Ic of the account corresponding to the streaming sound. More specifically, when the user as account B utters and streaming sound of account B is transmitted through management server Sr1 to game device 30A, game device 30A changes the manner of display of icon image IcB corresponding to account B shown in Fig. 9 while it reproduces streaming sound of account B. Icon image IcB is shown as being emphasized by way of example. Emphasized representation is such a representation technique that icon image IcB itself moves as jumping by way of example. The emphasized representation may include change in color of the icon image or display of a frame around the icon image. A manner of showing reception of streaming sound may be, for example, change in manner of display of streaming image Ds2 instead of or in addition to change in manner of display of icon image IcB. For example, the color of the frame of streaming image Ds2 may be changed, or a bar or the like may be shown in the vicinity of streaming image Ds2. In other words, change in manner of display should only be representation that allows the user to know which account emits sound. The manner of display may be changed when a volume of streaming sound is equal to or higher than a predetermined level or when streaming sound is reproduced. In order to readily know which account emits sound, panning may be performed for reproduction of streaming sound of a corresponding account, in accordance with a position of streaming image Ds or watch icon Wi with which each account is associated.

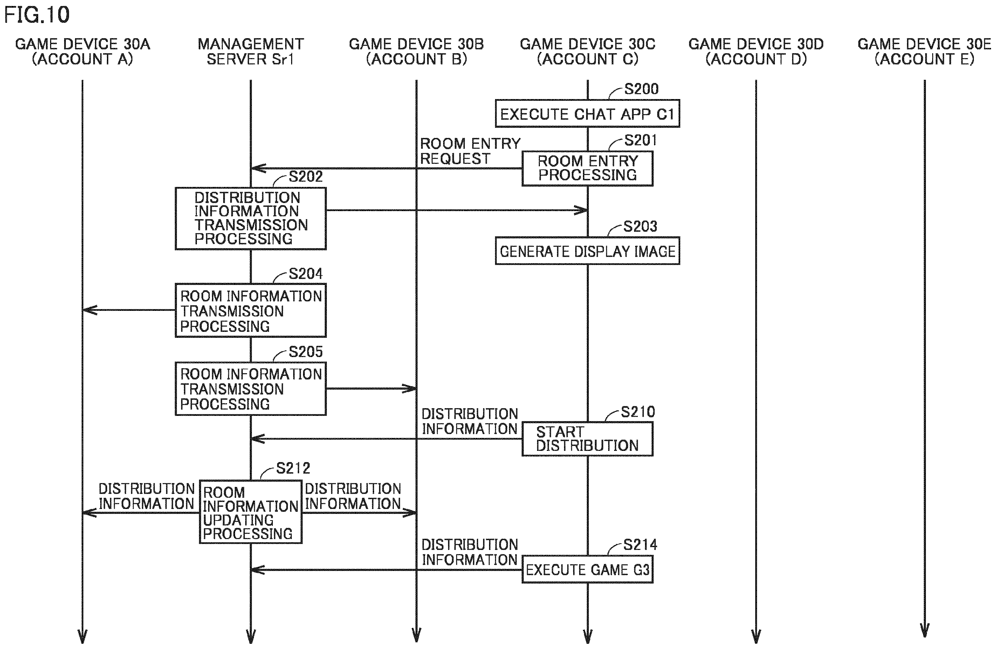

Fig. 10 is a second diagram showing a timing chart for illustrating streaming among users. Fig. 10 shows processing after step S117 in the timing chart in Fig. 4.

Fig. 10 illustrates an example where invited account C joins the virtual room. Explanation substantially the same as in the first diagram is not provided. Game device 30C executes chat application C1 (step S200). Game device 30C performs room entry processing (step S201). Game device 30C issues a room entry request to management server Sr1.

Management server Sr1 transmits streaming information received from game devices 30A and 30B in the image streaming state to game device 30C (step S202). Management server Sr1 may transmit the streaming information from game devices 30A and 30B simultaneously or individually.

Game device 30C generates a display image SdC based on the streaming information from game devices 30A and 30B in the image streaming state (step S203).

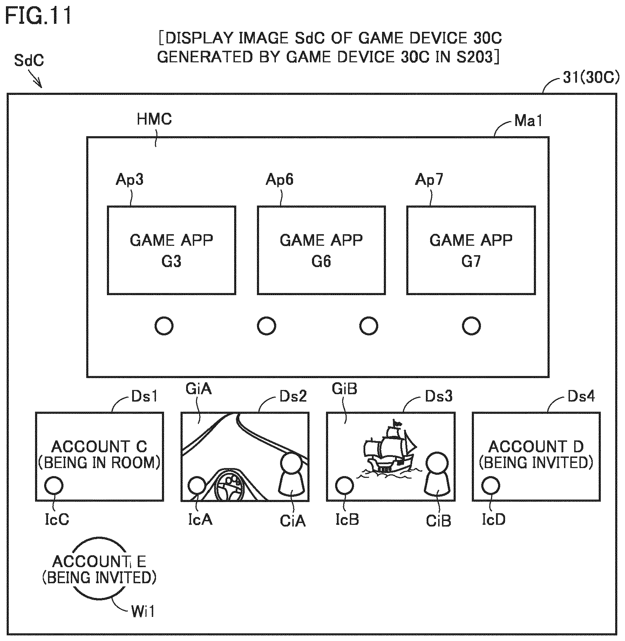

Fig. 11 is a diagram showing an exemplary display image SdC of game device 30C that is generated by game device 30C in step S203.

At this time point, game device 30C has executed no game application G. In this case, by way of example, in game device 30C, a home menu for selection of game application G to be executed is shown. Therefore, as shown in Fig. 11, a home menu image HMC is shown in main image Ma1 of game device 30C. Home menu image HMC includes app selection images Ap3, Ap6, and Ap7 showing applications G3, G6, and G7, respectively. Game device 30C starts execution of game application G associated with the selected app selection image, upon selection of app selection image Ap3, Ap6, or Ap7.

The user operates game device 30C while the user watches display of main image Ma1. In other words, in main image Ma1, a screen similar to various screens shown on display 31 while a communication application is not being executed may be shown, without being limited to the home menu or the running game application. While the communication application is being executed and game application G is not being executed, a predetermined image different from home menu image HMC may be shown in main image Ma1.

As shown in Fig. 11, account C is associated with streaming image Ds1, account A is associated with streaming image Ds2, and account B is associated with streaming image Ds3. Accounts D and E are associated with streaming image Ds4 and watch icon Wi1, respectively.

Referring back to Fig. 10, management server Sr1 performs transmission processing for updating the room information based on reception of the room entry request from game device 30C and transmitting the updated room information to game devices 30A and 30B (steps S204 and S205). In other words, management server Sr1 transmits entry of game device 30C into the virtual room.

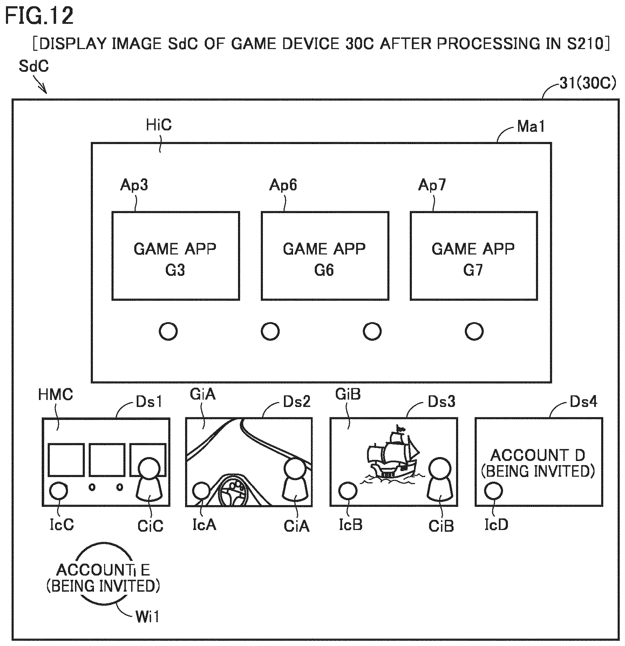

Game device 30C starts streaming based on an operation by account C (step S210). At this time, account C allows streaming of the captured image and sound. Fig. 12 is a diagram showing exemplary display image SdC of game device 30C after processing in step S210. Distribution image Ds1 includes a home menu image HiC. Home menu HiC does not have to be streamed. At this time, by way of example, streaming image Ds1 may include no home menu image HiC and may include an alternative image such as a black image. By way of example, when home menu image HiC is shown while game application G is running, home menu image HiC may be shown in main image Ma1 and an image Gi of game application G may be kept shown in streaming image Ds1.

In step S210, game device 30C transmits the streaming information including home menu image HiC being executed, streaming sound obtained by the microphone of game device 30C, and the streaming captured image.

In step S212, management server Sr1 performs the room information updating processing and stores entry of game device 30C in addition to game devices 30A and 30B into the image streaming state.

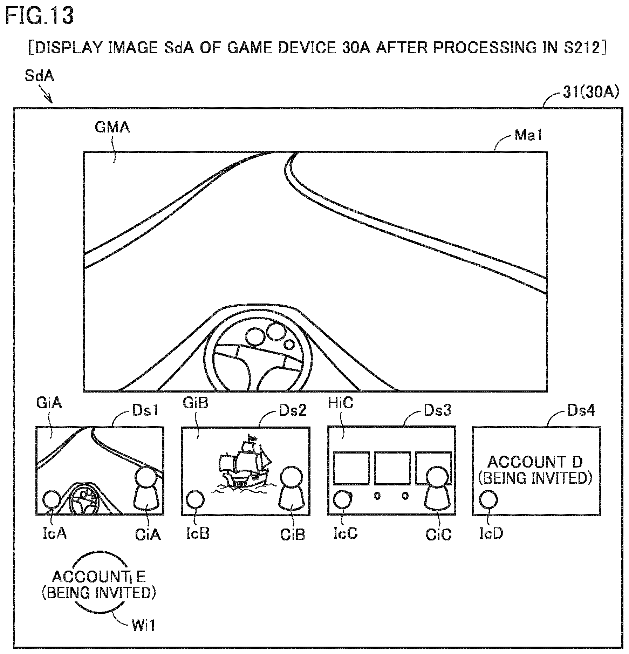

Management server Sr1 transmits the streaming information from game device 30C in the image streaming state to game devices 30A and 30B. The streaming information from game device 30C in the image streaming state is continually transmitted. Game devices 30A and 30B update display images SdA and SdB based on reception of the streaming information from game device 30C, respectively. Fig. 13 is a diagram showing exemplary display image SdA of game device 30A after processing in step S212. Distribution image Ds3 includes home menu image HiC, a streaming captured image CiC, and an icon image IcC.

Game device 30C executes game application G3 based on an operation by the user as account C (step S214). Game device 30C updates display image SdC based on execution of game application G3.

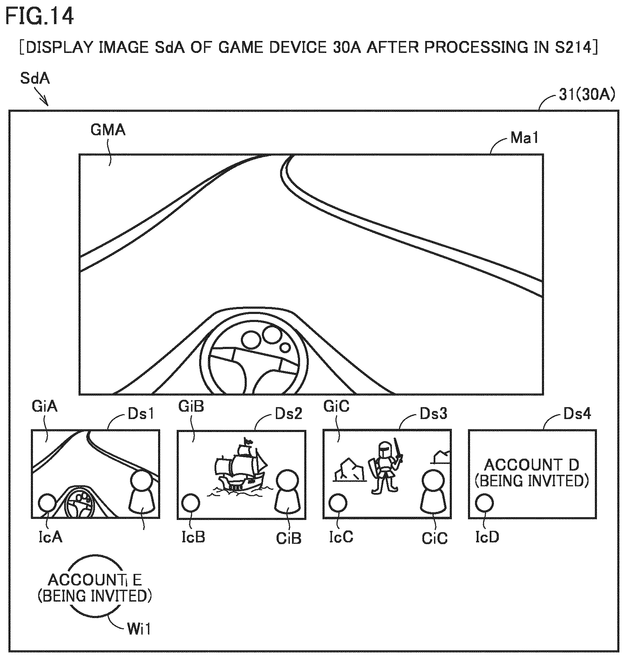

Fig. 14 is a diagram showing exemplary display image SdA of game device 30A after processing in step S214. As shown in Fig. 14, streaming image Ds3 includes a streaming game image GiC. Distribution game image GiC is shown also in game devices 30B and 30C as in game device 30A. The image of game application G3 is shown in main image Ma1 in game device 30C.

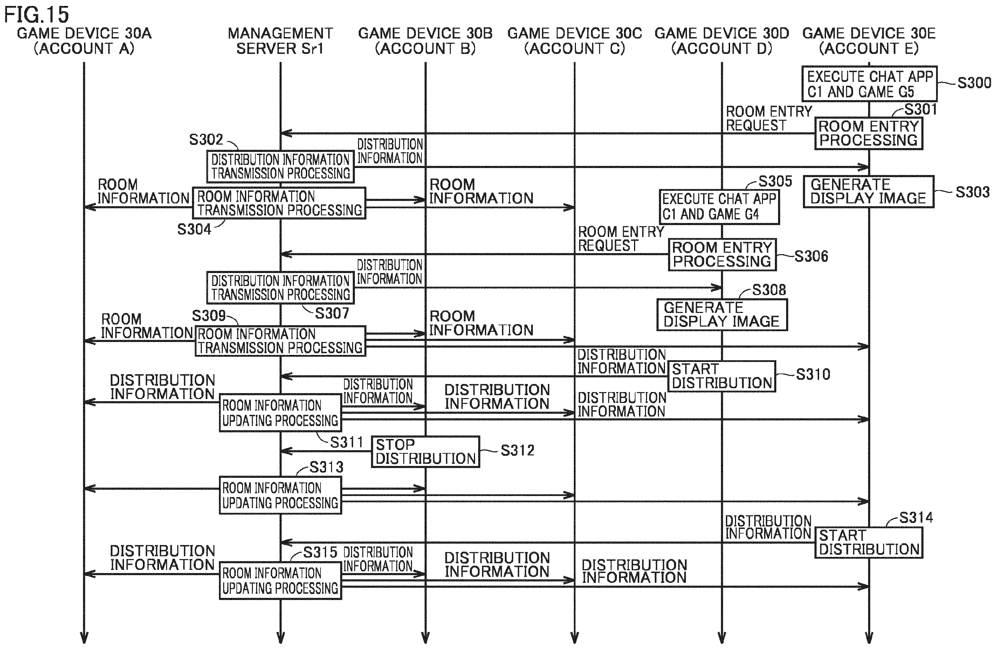

Fig. 15 is a third diagram showing a timing chart for illustrating streaming among users. Fig. 15 shows processing after step S214 in the timing chart in Fig. 10. Fig. 15 illustrates an example in which game devices 30D and 30E further enter the virtual room. Explanation substantially the same as in the first and second diagrams is not provided.

Game device 30E executes chat application C1 and game application G5 (step S300) and performs the room entry processing (step S301). Game device 30E issues a room entry request to management server Sr1. Management server Sr1 transmits to game device 30E, the streaming information received from game devices 30A to 30C in the image streaming state based on reception of the room entry request from game device 30E (step S302). In other words, the streaming information indicated in step S302 includes the streaming information from game devices 30A to 30C. The streaming information is continually transmitted.

Game device 30E generates a display image SdE based on reception of the streaming information from game devices 30A to 30C in the image streaming state (step S303).

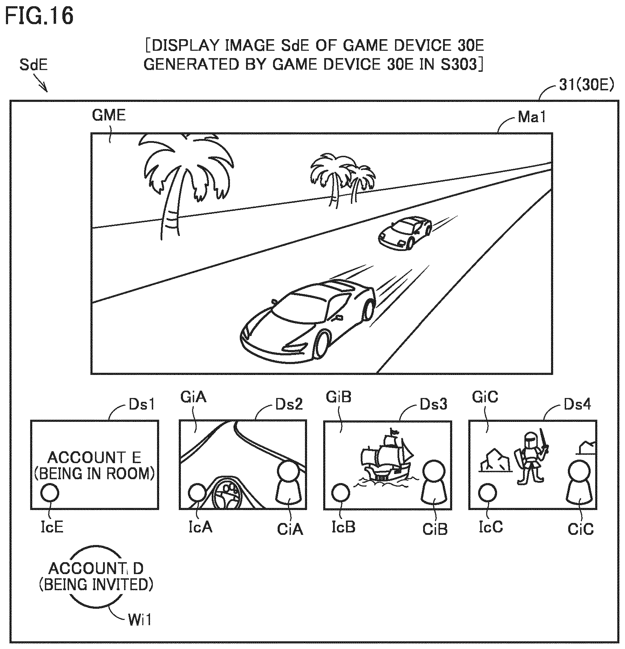

Fig. 16 is a diagram showing an exemplary display image SdE of game device 30E that is generated by game device 30E in step S303. As shown in Fig. 16, display image SdE with a layout similar to those on displays 31 of game devices 30A to 30C is shown on display 31 of game device 30E that has entered the virtual room. In step S303, game device 30E is executing game application G5. Therefore, as shown in Fig. 16, main image Ma1 of game device 30E includes a game image GME.

Since the number of accounts that are performing streaming at the time of entry of game device 30E into the virtual room has not reached the streaming upper limit number, as shown in Fig. 16, game device 30E associates account E with streaming image Ds1 shown at the leftmost position on display 31. Distribution image Ds1 shown in Fig. 16 includes icon image IcE of account E.

Since game devices 30A to 30C are in the image streaming state in Fig. 16, game device 30E shows images GiA to GiC of game applications G1 to G3 executed by accounts A to C, in streaming images Ds2 to Ds4, respectively. Game device 30E associates account D with watch icon Wi1.

Referring back to Fig. 15, management server Sr1 performs the transmission processing for updating the room information based on reception of the room entry request from game device 30E and transmitting the updated room information to game devices 30A to 30C (step S304). In other words, management server Sr1 transmits entry of game device 30E into the virtual room.

Game devices 30A to 30C update display images SdA, SdB, and SdC based on reception of the updated room information, respectively. The characters "being invited" shown in watch icon Wi1 shown on display 31 of each of game devices 30A to 30C are changed to "being in room."

Then, game device 30D executes game application G4 based on an operation by the user as account D (step S305). Game device 30D performs the room entry processing by executing chat application C1 (step S306). Game device 30D issues a room entry request to management server Sr1.

Management server Sr1 transmits the streaming information received from game devices 30A to 30C in the image streaming state to game device 30D based on reception of the room entry request from game device 30D (step S307).

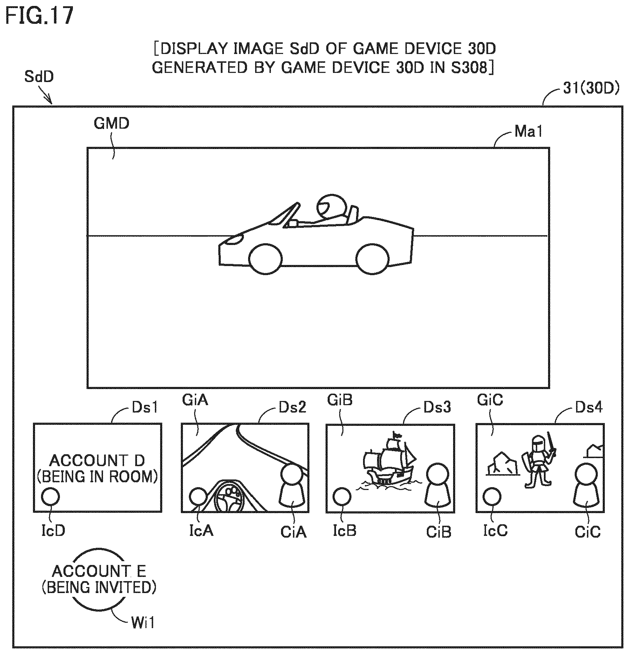

Game device 30D generates a display image SdD based on reception of the streaming information from game devices 30A to 30C in the image streaming state (step S308). Fig. 17 is a diagram showing exemplary display image SdD of game device 30D that is generated by game device 30D in step S308.

As shown in Fig. 17, display image SdD with a layout similar to those on displays 31 of game devices 30A to 30C and 30E is shown on display 31 of game device 30D that has entered the virtual room. At the time point of step S308, game device 30D is executing game application G4. Therefore, as shown in Fig. 17, main image Ma1 of game device 30D includes a game image GMD of game application G4.

Since the number of accounts that are performing streaming at the time of entry of game device 30D into the virtual room has not reached the streaming upper limit number, game device 30D associates account D with streaming image Ds1 shown at the leftmost position on display 31.

Since game devices 30A to 30C are in the image streaming state in Fig. 17, game device 30D shows images GiA to GiC of game applications G1 to G3 executed by accounts A to C, in streaming images Ds2 to Ds4, respectively. Game device 30D associates account E with watch icon Wi1.

Referring back to Fig. 15, management server Sr1 performs the transmission processing for updating the room information based on reception of the room entry request from game device 30D and transmitting the updated room information to game devices 30A to 30C and 30E (step S309). In other words, management server Sr1 transmits entry of game device 30D in the virtual room.

Game devices 30A to 30C and 30E update display images SdA to SdC and SdE based on reception of the updated room information, respectively. As a result of processing in step S309, the characters "being invited" for account D shown on display 31 of each of game devices 30A to 30C and 30E are changed to "being in room."

Game device 30D then starts streaming based on an operation by the user as account D (step S310). As streaming is started, the user as account D allows streaming of sound collected by microphone 38 and the captured image captured by camera 37. Based on start of streaming, game device 30D updates display image SdD. Game device 30D shows a streaming game image GiD and a streaming captured image CiD in streaming image Ds1.

In step S310, game device 30D transmits the streaming information therefrom to management server Sr1. The streaming information from game device 30D includes streaming game image GiD of running game application G4, streaming sound based on sound collected by microphone 38 of game device 30D, and the streaming captured image based on the image captured by camera 37 of game device 30D.

Management server Sr1 performs the room information updating processing based on reception of the streaming information from game device 30D (step S311). In step S311, management server Sr1 stores entry of game device 30D in addition to game devices 30A to 30C into the image streaming state. In step S311, the number of game devices 30 in the image streaming state reaches the streaming upper limit number.

In step S311, management server Sr1 transmits the streaming information from game device 30D in the image streaming state to game devices 30A to 30C and 30E. Game devices 30A to 30C and 30E update display images SdA to SdC and SdE based on reception of the streaming information from game device 30D, respectively.

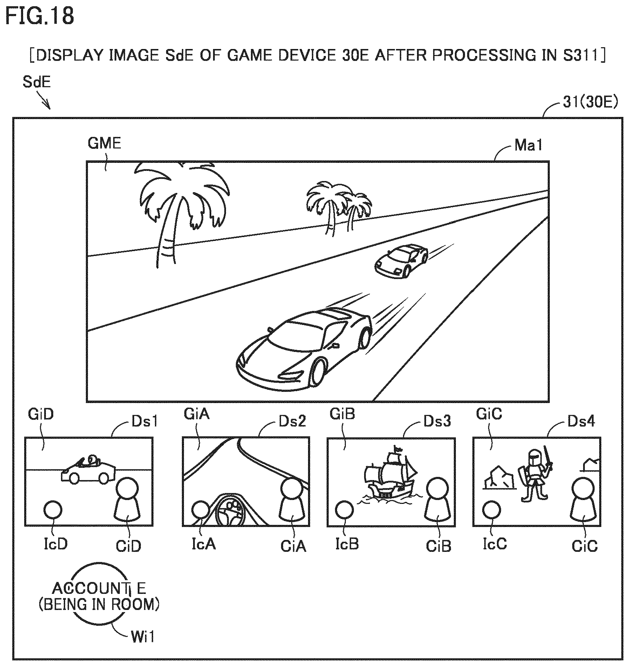

Fig. 18 is a diagram showing exemplary display image SdE of game device 30E after processing in step S311. As shown in Fig. 18, game device 30E associates account D with streaming image Ds1 and associates account E thereof with watch icon Wi1. In other words, game device 30E interchanges the accounts associated with streaming image Ds1 and watch icon Wi1 with each other.

In the image shown in streaming image Ds1 in Fig. 18, an image in which icon image IcD and streaming captured image CiD are superimposed on streaming game image GiD of game application G4 being executed by account D is shown. Since four game devices 30 have already been streaming the images in the virtual room, game device 30E is not able to start streaming of the image. In information processing system 100 in the present embodiment, when the number of game devices 30 in the image streaming state reaches the streaming upper limit number, game device 30 which is not streaming the image is not able to start streaming of the image. Game device 30E may be able to stream streaming sound. In other words, game device 30E may transmit the streaming information including streaming sound to management server Sr1. At this time, another game device 30 may be able to reproduce streaming sound from game device 30E and talk with the user who uses game device 30E. In addition, at this time, the manner of display of watch icon Wi1 may be changed.

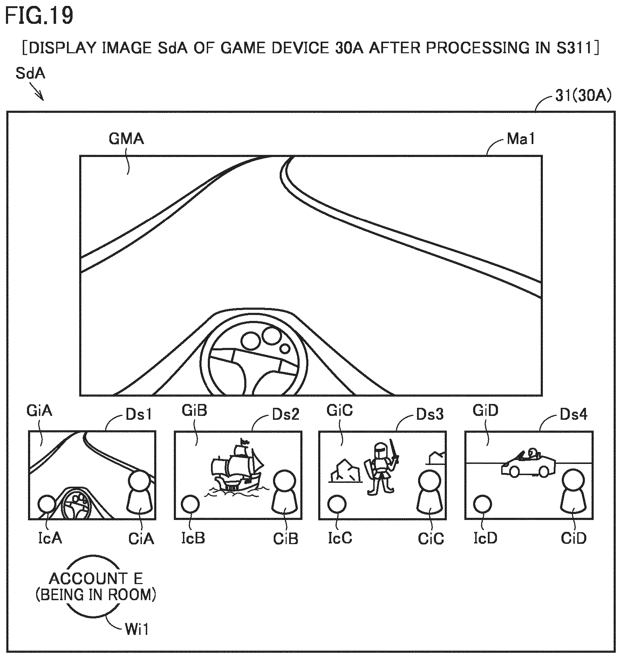

Fig. 19 is a diagram showing exemplary display image SdA of game device 30A after processing in step S311. As shown in Fig. 19, an image in which icon image IcD and streaming captured image CiD are superimposed on the image of game application G4 being executed by account D is shown in the image shown in streaming image Ds4.

Referring back to Fig. 15, game device 30B stops streaming (step S312). Game device 30B transmits an instruction to stop streaming to management server Sr1 and stops transmission of the streaming information. Management server Sr1 updates the room information based on reception of the instruction to stop streaming from game device 30B (step S313). In step S313, management server Sr1 transmits the fact that the number of game devices 30 in the image streaming state has not reached the streaming upper limit number to game devices 30A and 30C to 30E. Game device 30B may stop streaming of the image of running game application G and the image captured by the camera, whereas it may continue streaming of streaming sound.

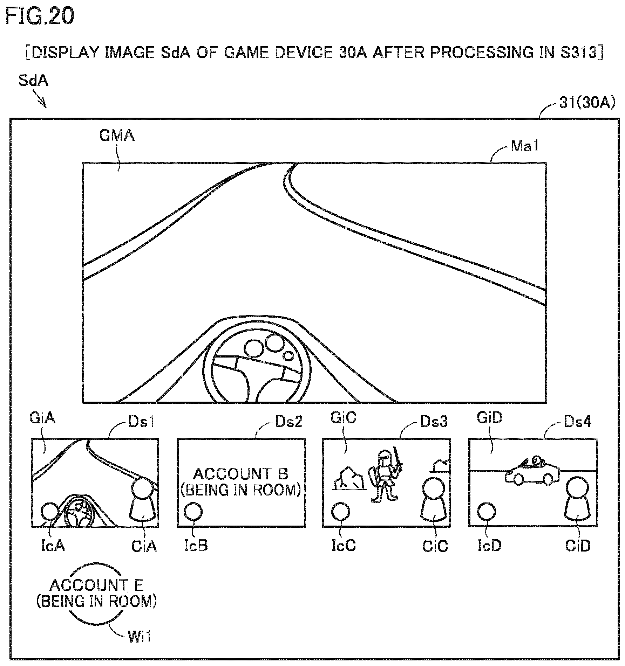

Fig. 20 is a diagram showing exemplary display image SdA of game device 30A after processing in step S313. As a result of stop of streaming by account B, as shown in Fig. 20, streaming image Ds2 does not include streaming captured image CiB.

Referring back to Fig. 15, game device 30E starts streaming of the image (step S314). Game device 30E transmits the streaming information therefrom to management server Sr1. The streaming information from game device 30E includes a streaming game image GiE of running game application G5, streaming sound based on sound collected by microphone 38 of game device 30E, and the streaming captured image based on the image captured by camera 37 of game device 30E. When the streaming information including the streaming sound has already been transmitted, the image of game application G and the image captured by the camera are added to the streaming information.

Management server Sr1 performs the room information updating processing based on reception of the streaming information from game device 30E (step S315). In step S315, the number of game devices 30 in the image streaming state again reaches the streaming upper limit number.

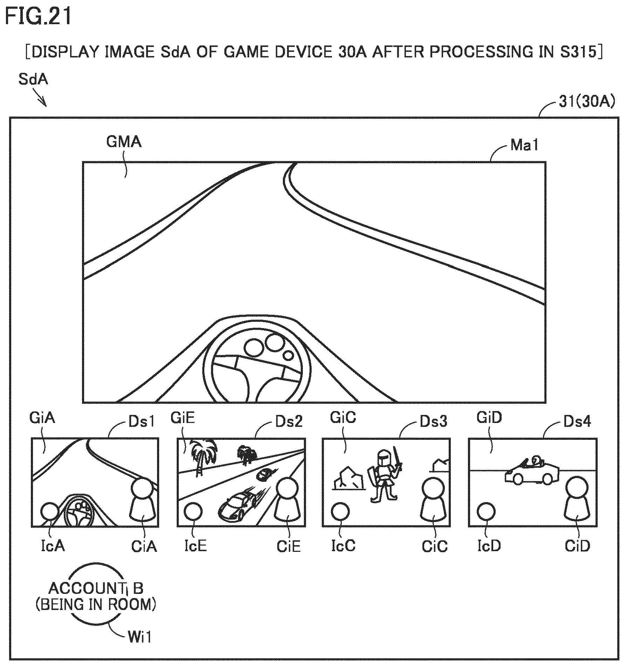

In step S315, management server Sr1 transmits the streaming information from game device 30E in the image streaming state to game devices 30A to 30D. Fig. 21 is a diagram showing exemplary display image SdA of game device 30A after processing in step S315. As shown in Fig. 21, game device 30A associates account E with streaming image Ds2 and associates account B which is not performing streaming with watch icon Wi1. In other words, game device 30A interchanges the accounts associated with streaming image Ds2 and watch icon Wi1 with each other.

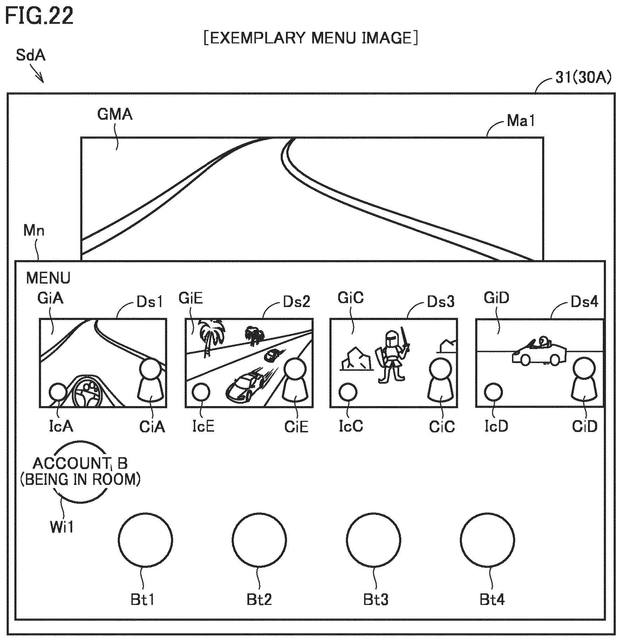

A display image Sd when a menu image Mn is shown will then be described. Fig. 22 is a diagram for illustrating an exemplary menu image Mn. Fig. 22 shows an example in which menu image Mn is shown in game device 30A.

Menu image Mn is an image for configuring settings for game device 30. Menu image Mn may be an image for configuring settings for various functions in a communication application. Menu image Mn is shown in display image Sd based on an operation input from the user. For example, menu image Mn is shown in response to the user pressing a physical specific switch included in user-operable portion 32 provided in game device 30A or connected to game device 30A while the communication application is running. Game device 30 may start up the communication application in response to pressing of the specific switch while the communication application is not running. The communication application may be started up by selection of a predetermined icon or item in another menu such as a home menu. At this time, the specific switch functions as a short-cut key to start up the communication application. For example, a home menu image may be shown in response to an operation by the user while the communication application is running, and in response to selection of an icon for starting up the communication application, an image of the communication application may be shown again, and menu image Mn may be shown.

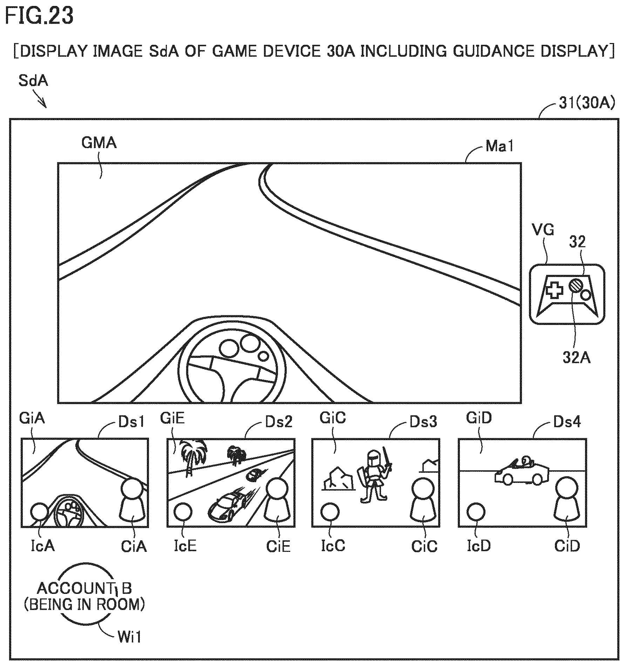

Guidance display for advising the user that menu image Mn will be shown by an operation on the specific switch may be given. Fig. 23 is a diagram showing exemplary display image SdA of game device 30A including guidance display. As shown in Fig. 23, guidance display VG may show a picture that shows user-operable portion 32 including a specific switch 32A for showing menu image Mn. Since specific switch 32A is shown as being emphasized, the user can know that menu image Mn can be shown by pressing specific switch 32A.

This display may be switched depending on a type of connected user-operable portion 32. For example, an image that simulates a shape of a connected game controller and an image that shows a location of a specific switch may be shown. In an example where user-operable portion 32 without a function to show menu image Mn is connected, guidance display VG does not have to be given, or an image which prompts the user to connect user-operable portion 32 with the function to show menu image Mn may be shown. Depending on a status of execution of a communication application, contents of guidance display or whether or not to show guidance display may be changed. For example, when a volume of streaming sound exceeds a threshold value, the user may feel like adjusting the volume, and hence guidance display may be shown as being emphasized. While menu image Mn is shown, guidance display does not have to be shown.

Menu image Mn may be shown as gradually sliding up from the bottom of display image SdA. As shown in Fig. 22, menu image Mn covers a lower part of main image Ma and allows an upper part thereof to be exposed. In other words, menu image Mn stops in a stage where it covers a part of main image Ma when it slides up from below. Menu image Mn includes buttons Bt1, Bt2, Bt3, and Bt4 which are icon images. Buttons Bt1, Bt2, Bt3, and Bt4 will collectively be referred to as a "button Bt." Each button Bt is an interface for setting various functions of a communication application. The user can select each button Bt with a direction input portion or a button which is an exemplary user-operable portion 32. While menu image Mn is not shown, such a direction input portion or button is used for an operation of game application G to be executed or an operation of a home menu. In other words, while menu image Mn is shown, operation of menu image Mn is prioritized and operation of running game application G is restricted.

Buttons Bt1 to Bt3 are, for example, buttons for selection as to whether or not to stream the image of running game application G, the image captured by the camera, and sound, respectively. In other words, the user can individually set whether or not to stream the image of running game application G, the image captured by the camera, and sound. As described above, in the virtual room, at most the streaming upper limit number of game devices 30 can streamed images of game applications G and/or images captured by the cameras. In other words, while at least one of a streaming game image Gi or a streaming captured image Ci is shown in each of Ds1 to Ds4, game device 30 used by an account not associated with Ds1 to Ds4 is not able to show the image of game application G nor the image captured by the camera, and button Bt for permission of streaming of a corresponding image cannot be pressed. For example, corresponding button Bt may be grayed out, or corresponding button Bt itself does not have to be shown. Button Bt4 is a button, for example, to open a detail setting menu for making other setting relating to other communication applications. In the detail setting menu, a layout in display image Sd (for example, a size or a position of main image Ma1 or streaming image Ds), balance between the volume of the game application and the volume of sound, a position of the streaming captured image in display image Sd, or how to handle the streaming captured image shown on game device 30 or another game device 30 (to blur away a background of a person, to cut out the person, to cut out only a portion around a face of the person, or the like) based on the image captured by the camera which is obtained by game device 30, or the like may be set. Without being limited to setting, information on another account may be shown, or a notification about another account may be given. The number of buttons Bt and functions of buttons Bt are by way of example, and limitation is not intended. An image for setting a predetermined function may be shown, for example, by an operation of another specific switch in user-operable portion 32 while menu image Mn is shown. By way of example, an image for setting how to handle an image captured by the camera of game device 30 may be shown. As described above, a similar setting item may be located also in the detail setting menu. At this time, the image for making setting may be the same or different between an example where the specific switch is operated and an example where selection from the detail setting menu is made.

In the present embodiment, as shown in Fig. 22, menu image Mn is large to such an extent as covering, when it slides up, streaming images Ds1 to Ds4 that have been shown till then. Distribution images Ds1 to Ds4, however, are apparently kept shown as being incorporated in menu image Mn. Information processing system 100 can thus allow the user to know the status of streaming in the virtual room also while menu image Mn1 is shown. This is also applicable to watch icon Wi. Distribution images Ds1 to Ds4 may be shown as being located on a front side of the background of menu image Mn, and they may slide up together with menu image Mn when menu image Mn slides up. Distribution images Ds1 to Ds4 may be shown at positions different from display positions thereof in original display image SdA, and may be shown, for example, at positions above the original positions as shown in Fig. 22. Buttons Bt1 to Bt4 can thus be shown in a space below streaming images Ds1 to Ds4 in display image SdA, and a display space can be made effective use of.

The user can make selection from among streaming images Ds1 to Ds4 included in menu image Mn, similarly to buttons Bt1 to Bt4. In other words, while menu image Mn is not shown, operation on user-operable portion 32 is mainly used for operation of running game application G, and cannot be used for selection from among streaming images Ds1 to Ds4. While menu image Mn is shown, however, streaming images Ds1 to Ds4 are in a selectable state. When selection from among streaming images Ds1 to Ds4 is made, a predetermined function may be performed. For example, when streaming image Ds1 is selected, streaming image Ds1 may include no streaming game image Gi or no streaming captured image Ci. In other words, the image may be muted. Alternatively, when streaming image Ds1 is selected, a sub menu may additionally be shown. As the user operates the sub menu, the user may make setting as to streaming image Ds1 or an account associated with streaming image Ds1. For example, the sub menu may include an item for muting the streaming game image or the streaming captured image shown in streaming image Ds1, an item for accessing a purchase page to purchase game application G corresponding to the streaming game image shown in streaming image Ds1, an item for a notification that the account associated with streaming image Ds1 is an inappropriate account, or an item for muting sound from the account associated with streaming image Ds1. The sub menu may be shown as being superimposed on streaming image Ds1 or may be shown in the vicinity thereof. The sub menu may cover a part of an adjacent streaming image. Similarly, while menu image Mn is shown, the user may select also watch icon Wi.

Menu image Mn may be shown also in game devices 30B to 30E.

In the present embodiment, an example in which at least the streaming upper limit number of (four) accounts belong to the virtual room is shown. Less than the streaming upper limit number of accounts may belong to the virtual room. For example, two or three accounts may belong to the virtual room. At this time, two or three streaming images Ds may be shown and accounts may be associated with respective streaming images. In an example where there are two or three streaming images Ds, display positions thereof may be centered in a lateral direction. In an example where two or three accounts belong to the virtual room as well, four streaming image Ds may be shown. At this time, a predetermined image may be included in streaming image Ds associated with no account.

### [D. Flowchart]

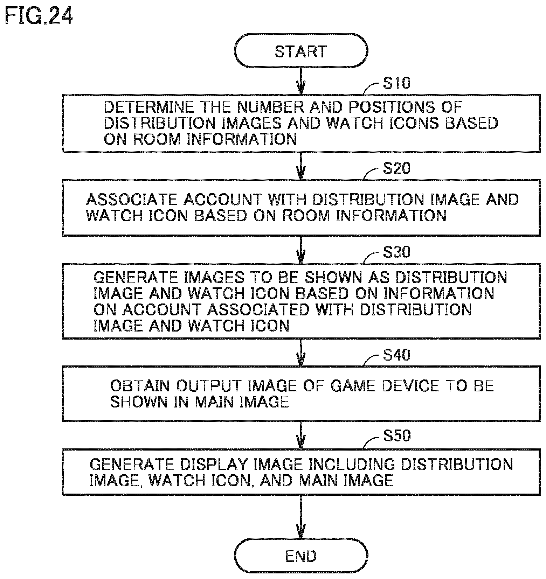

Fig. 24 is a flowchart for illustrating, in terms of functions, processing for generation of a display image by game device 30. Processing in the flowchart shown in Fig. 24 is performed by execution of image generation program 366 by processor 34.

Game device 30 determines the number and positions of streaming images Ds and watch icons Wi based at least on the room information (step S10). Game device 30 associates an account with each of streaming image Ds and watch icon Wi based on the room information (step S20).

Game device 30 generates images to be shown as streaming image Ds and watch icon Wi based on information on the accounts associated with streaming image Ds and watch icon Wi (step S30). The information on the account in step S30 includes the streaming information from the account when the account is performing streaming. In step S30, streaming game image Gi, icon image Ic, streaming captured image Ci, or the like which may be included in streaming image Ds is determined.

Game device 30 outputs an output image of game device 30 to be shown in main image Ma1 (step S40). The output image of game device 30 in step S40 may include game image GMA showing running game application G or a home menu image HM. Game device 30 generates display image Sd including streaming image Ds, watch icon Wi, and main image Ma1 (step S50). Display image Sd is thus shown on display 31.

### [E. First Modification]

An example in which up to the streaming upper limit number of streaming images Ds are shown regardless of the image streaming state of each account is described in the present embodiment. The number of streaming images Ds, however, may be varied depending on the image streaming state of the account. As the number of shown streaming images Ds is smaller, main image Ma1 and/or streaming image Ds may be made larger.

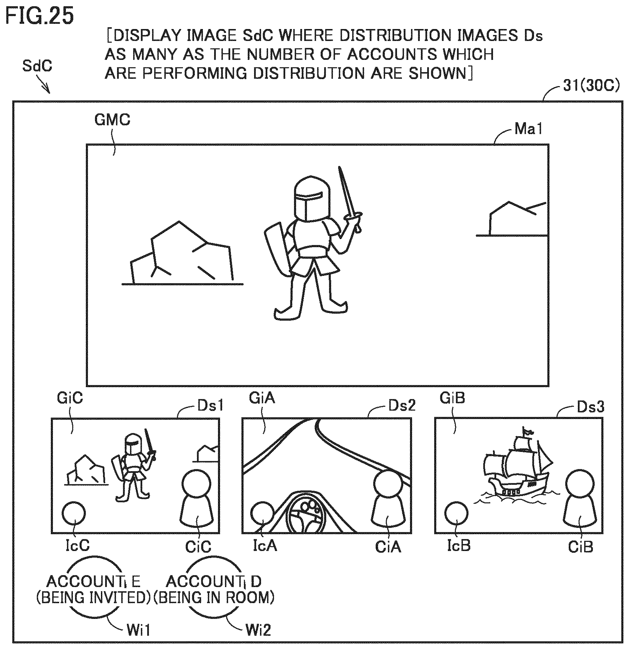

Fig. 25 shows exemplary display image Sd where streaming images Ds as many as the number of accounts that are performing streaming are shown. Accounts associated with streaming images Ds1, Ds2, and Ds3 are in the image streaming state. Since accounts D and E are not in the image streaming state, on the other hand, associated streaming images Ds are not included in display image Sd. Therefore, in spite of the fact that the streaming upper limit number is four and at least four accounts belong to the virtual room, the number of shown streaming images Ds is three. Distribution images Ds are shown as being centered in the lateral direction. Accounts D and E are associated with watch icons Wi1 and Wi2, respectively.

### [F. Second Modification]

An example in which an image of a game application included in streaming information transmitted by game device 30 includes one streaming game image Gi lower in quality than an image shown in main image Ma1 is described in the present embodiment. In a second modification, the streaming information includes, in addition to streaming game image Gi (which is referred to as a streaming game image Gi(a) below) described with reference to Figs. 1 to 24, a streaming game image Gi(b) higher in quality than streaming game image Gi(a). Distribution game image Gi(b) may be lower in quality than a game image GM or equal in quality thereto.

In the second modification, game device 30 can accept from the user through user-operable portion 32, an instruction to show at least one streaming image Ds as being enlarged. Game device 30 can show an image streamed by an account associated with designated streaming image Ds, as an enlarged streaming image Mg1 larger than streaming image Ds, in accordance with the instruction.

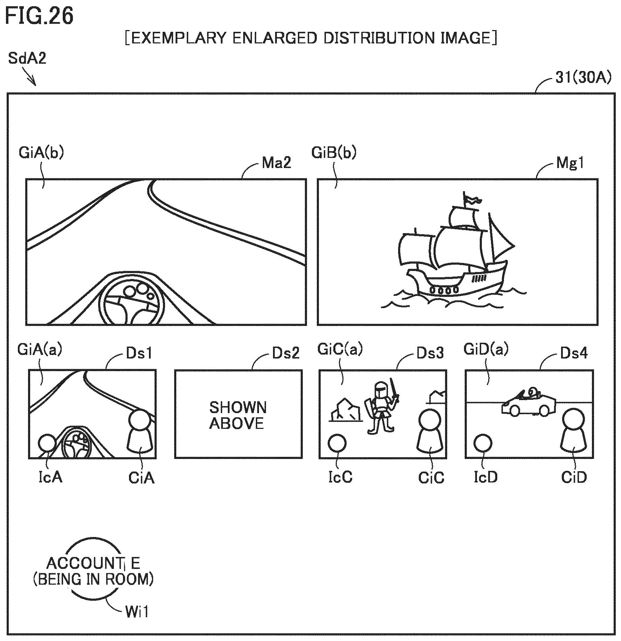

Fig. 26 is a diagram for illustrating exemplary enlarged streaming image Mg1 in the second modification. Fig. 26 is a diagram showing a display image SdA2 shown on display 31 of game device 30A. Fig. 26 shows display 31 of game device 30A after display image SdA shown in Fig. 19 is switched from the state where it is shown on display 31 of game device 30A to display image Sd2A as a result of an operation by the user as account A.

Enlarged streaming image Mg1 which is streaming image Ds1 shown as being enlarged is thus shown. As shown in Fig. 26, with display of enlarged streaming image Mg1, a main image Ma2 is shown. Main image Ma2 is an image resulting from reduction of a display area of main image Ma1. Enlarged streaming image Mg1 is shown at a position horizontally aligned with main image Ma2.

Game device 30A shows enlarged streaming image Mg1 and main image Ma2 such that enlarged streaming image Mg1 is substantially identical in size to main image Ma2 in display 31.

In information processing system 100, management server Sr1 starts transmission of streaming game image Gi(b) of game application G of quality corresponding to enlarged streaming image Mg1 to the reception terminal, upon reception of information including an instruction to show enlarged streaming image Mg1 from the reception terminal.

Enlarged streaming image Mg1 shown in Fig. 26 includes a game image GiB(b) received from game device 30B. Game image GiB(b) has image quality suitable for a size of enlarged streaming image Mg1. As shown in Fig. 26, main image Ma2 includes game image GiA(b) suitable for the size of main image Ma2.

In the example in Fig. 26, as game image GiB is shown as being enlarged, characters "shown above" are shown in streaming image Ds2 and display of the image based on a game image GiB(a) is stopped. At this time, reception of game image GiB(a) is also stopped. Information processing system 100 can thus reduce an amount of communication involved with reception of game image GiB(a). Game device 30B may continue transmission of game image GiB(a) to management server Sr1. At this time, game device 30 other than game device 30A that does not show a game image GiB(b) may show game image GiB(a) in streaming image Ds. In another example, both of game images GiB(a) and GiB(b) may be received and game image GiB may be shown in both of streaming image Ds2 and enlarged streaming image Mg1.

Thus, in the second modification, as each of game images Gi(a) and Gi(b) is transmitted to management server Sr1 as the streaming information, each reception terminal can select which game image is to be shown.

An example where enlarged streaming image Mg1 is smaller than main image Ma1 and larger than streaming image Ds is described with reference to Fig. 26. Enlarged streaming image Mg1, however, may be shown in a size equal to main image Ma1. In this case, enlarged streaming image Mg1 and main image Ma1 may be aligned in a vertical direction, the size of main image Ma1 may be made smaller to a size substantially the same as streaming image Ds, or main image Ma1 does not have to be shown. Alternatively, enlarged streaming image Mg1 may be shown as being larger than main image Ma1. At this time, main image Ma1, streaming image Ds, and watch icon Wi do not have to be shown. Enlarged streaming image Mg1 may be shown in what is called a full screen mode.

Though streaming captured image CiB is not superimposed on enlarged streaming image Mg1 in the example in Fig. 26, it may be superimposed. In an example where streaming captured image CiB is superimposed on enlarged streaming image Mg1, streaming captured image CiB may be enlarged to a size in accordance with enlarged streaming image Mg1, or may be superimposed in a size the same as streaming captured image CiA or the like shown in Fig. 26. In an example where streaming captured image CiB is not superimposed on enlarged streaming image Mg1, streaming captured image CiB may be superimposed on streaming image Ds2.

### [G. Other Modifications]

Other forms which are partial modification of the embodiment described above will be described below.

Each of processors 14 and 34 may be composed of a single chip or a plurality of chips. Each of processors 14 and 34 and associated processing circuitry may be composed of a plurality of computers connected to one another through a wire or wirelessly over a local area network, a wireless network, or the like. The processor and the associated processing circuitry may be implemented by such a cloud computer as performing remote computation based on input data and outputting a result of computation to another device located at a distant location.

An example in which game device 30 itself possesses and executes game application G in execution of game application G is described above. In one aspect, however, game application G may be possessed and executed in an external server (which may include another game device 30 or management server Sr1). In other words, a game application running in game device 30 includes also a game that operates on game device 30 from a point of view of the user owing to cloud gaming/streaming/mirroring, or the like. This is also applicable to execution of a communication application.

While a plurality of game applications G is running, streaming game image Gi may include images of all of those game applications G or may include an image of at least one of them. The user may be able to select an image of which game application G is to be included in streaming game image Gi. For example, an image of game application G different from game application G shown in main image Ma1 may be included in streaming game image Gi, or an image of game application G shown in main image Ma1 does not have to be included in streaming game image Gi.

Though the example described above illustrates that, in information processing system 100, streaming game image Gi is lower in quality than image GM of game application G shown in main image Ma1, they may be identical in quality.

Though an example in which the user (account A) who operates game device 30A generates the virtual room is described above, the user who generates the virtual room may be other users corresponding to accounts B to E or may be a user corresponding to an account other than accounts A to E.

The example above illustrates that the user who owns an account joins the virtual room. The user who can join the virtual room, however, is not limited to the user who owns an account, but a user who does not own an account can join.

An example where which game device 30 is associated with which streaming image Ds or watch icon Wi is different for each game device 30 is described above. Association, however, may be the same among game devices 30. For example, such a rule that association is the same among game devices 30 may be set, and each game device 30 may determine association under the rule. Alternatively, management server Sr1 may determine association, and may transmit information on the determined association to each game device 30. Alternatively, for example, association of at least streaming image Ds may be the same among game devices 30. Thus, for example, alignment of shown images of game applications G is the same among game devices 30, and hence such a conversation as "what is a game second from the left?" can smoothly be held among users.

When game device 30 associates an account associated therewith with watch icon Wi, it may associate the account with watch icon Wi at the leftmost position.

Though the user's own account is described as being preferentially associated with streaming image Ds and the watch icon at the left end, it may preferentially be associated with streaming image Ds and the watch icon at a specific position, without being limited to the left end. The user's own account does not have to preferentially be associated with streaming image Ds and the watch icon at a specific position but may be associated with those at an appropriate position.

Display image Sd does not have to include watch icon Wi. In other words, an account that has entered the virtual room and is not associated with streaming image Ds may be associated with no image. Display image Sd does not have to include all images that are being streamed in the virtual room. For example, the user may switch an image of game application G included in certain streaming image Ds from an image being streamed by certain game device 30 to an image that is being streamed by another game device and has not yet been shown. A switching technique is not limited, and it may be selection of an item or a scroll operation.

An example in which the streaming information may include streaming captured image Ci and streaming sound in addition to streaming game image Gi is described above. In other words, the streaming information may include at least one of streaming game image Gi, streaming captured image Ci, and streaming sound, for example, based on selection by the user. In another example, for example, streaming of an image obtained by the camera may not be enabled. In this case, the streaming information may include streaming game image Gi and streaming sound. In another example, streaming of streaming game image Gi or streaming sound may not be enabled.

The streaming information may include also game sound of running game application G. The reception terminal may reproduce all game sound or game sound selected by the user. Alternatively, when the enlarged streaming image in the second modification is shown, game sound of game application G may be reproduced. At this time, game sound of game application G of the game device may be reproduced or does not have to be reproduced.

Distribution image Ds does not have to include information indicating an account, such as icon image Ic. For example, in an example where streaming image Ds includes streaming game image Gi or streaming captured image Ci, information indicating the account does not have to be shown.

While a terminal is in the image streaming state, an image of game application G executed by the terminal itself does not have to be shown in streaming image Ds. In other words, even in the image streaming state, only main image Ma1 may be shown as an image of the game application executed by the terminal itself.

Distribution image Ds may include only streaming captured image Ci, without including streaming game image Gi. In this case, streaming captured image Ci may be shown as being larger than in an example where streaming image Ds includes both of streaming game image Gi and streaming captured image Ci. In other words, in the example where streaming image Ds includes both of streaming game image Gi and streaming captured image Ci, it includes streaming captured image Ci smaller than in the example where it includes only streaming captured image Ci without including streaming game image Gi.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A game device (30) with which a first account is associated, the game device (30) being configured to communicate with another game device (30), the game device (30) comprising:
a stream transmitter configured to stream a streaming game image that is based on an image of a running game application to the another game device (30) with which another account belonging to a group, in which the first account is joining, is associated;
a receiver configured to receive a streaming game image from the another game device (30) with which the another account joining the group is associated; and
an image generator, wherein
the image generator is configured to generate a first display image (Sd) comprising a first image (Mal) and a plurality of second images (Ds1 to Ds4), the first image (Mal) being based on an image (GMA) of the game application running in the game device (30) with which the first account is associated,
each of the plurality of second images is associated with different accounts among a plurality of accounts that belong to the group including the first account,
while a game device with which an account associated with one of the second images is streaming the streaming game image,
when the account associated with the one of the second images is the first account, the one of the second images comprises an image based on the image of the running game application, and
when the account associated with the one of the second images is the another account, the one of the second images comprises the streaming game image received from the another game device with which the another account is associated, and
while the game device associated with the account associated with the one of the second images is not streaming the streaming game image, the one of the second images comprises an image that represents the account associated with the one of the second images.

2. The game device according to claim 1, wherein
all accounts including the first account, that belong to the group and are associated with game devices that are streaming the streaming game images, are associated with the plurality of second images (Ds1 to Ds4), respectively.

3. The game device according to claim 2, wherein
a predetermined number that is an upper limit of accounts which can be associated with the second images respectively is smaller than the number of accounts which can belong to the group.

4. The game device according to claim 3, wherein
when the number of accounts belonging to the group is larger than the predetermined number, the image generator is configured to generate the first display image (31) comprising the predetermined number of second images and a third image as many as a difference between the number of accounts belonging to the group and the predetermined number, and
the third image is associated with an account not associated with any of the second images among the plurality of accounts belonging to the group and includes an image that represents the account associated with the third image.

5. The game device according to claim 4, wherein
while another game device associated with the another account associated with a corresponding one of the second images is not streaming the streaming game image, streaming of the streaming game image is enabled, and
when the first account associated with the third image located at a second position in the first display image starts streaming of the streaming game image, the image generator is configured to generate the first display image (31) in which the corresponding one of the second images with which the account is associated is located at a first position and a third image with which the account associated with the corresponding one of the second images that has been located at the first position till then is associated is located at the second position.

6. The game device according to claim 5, wherein
when the first account is associated with a corresponding one of the second images when the first account comes to belong to the group, the image generator is configured to generate the first display image (31) in which the second image associated with the first account is located at a predetermined third position.

7. The game device according to any of claims 1 to 6, wherein
accounts belonging to the group comprises an account that is joining the group, an account that has invited an another account to join the group, and an account that has been invited to join the group but has not joined the group.

8. The game device according to any of claims 1 to 7, wherein
the stream transmitter is configured to stream a streaming captured image based on an image captured by a camera (37) to the another game device with which the another account belonging to the group is associated,
the receiver is configured to receive the streaming captured image from the another game device with which the another account belonging to the group is associated, and
while the game device with which the account associated with a corresponding one of the second images is associated is streaming the streaming captured image, the one of the second images comprises the streaming captured image.

9. The game device according to any of claims 1 to 8, wherein
the image generator is configured to generate the first display image (31) that comprises the second images, each of the second images comprising an image representing the account associated with the one of the second images respectively, or the first display image (31) where the image representing the account associated with the one of the second images is arranged near the one of the second images, respectively,
the stream transmitter is configured to stream a streaming sound based on audio input to the another game device,
the receiver is configured to receive the streaming sound from the another game device, and
the image generator is configured to change a form of display or a position of the image representing the account associated with the one of the second images based on the streaming sound received from the another game device.

10. The game device according to any of claims 1 to 9, wherein
while the stream transmitter is streaming the streaming game image and while the first account is associated with a corresponding one of the second images, the image generator is configured to generate the first display image comprising the one of the second images comprising an image based on the streaming game image.

11. The game device according to any of claims 1 to 10, wherein
the stream transmitter is configured to stream a first streaming game image and a second streaming game image higher in quality than the first streaming game image, and
the receiver is configured to receive at least either one of the first streaming game image and the second streaming game image from the another game device.

12. The game device according to claim 11, wherein
the image generator is configured to generate, based on the second streaming game image, a second display image with which the another account belonging to the group is associated, the second display image comprising a single fourth image larger than any one of the second images.

13. The game device according to claim 11 or 12, wherein
when the image generator generates the first display image, the receiver is configured to receive the first streaming game image and not to receive the second streaming game image.

14. The game device according to any of claims 1 to 13, wherein
the image generator is configured to generate a third display image comprising a menu image (Mn) that covers a part of the first image and comprises the second images.

15. A method to be performed by a first game device (30) with which a first account is associated, the method comprising:
streaming a streaming game image that is based on an image of a running game application to another game device with which another account belonging to a group, in which the first account is joining, is associated;
receiving a streaming game image from the another game device with which the another account joining the group is associated; and
generating a first display image (Sd) comprising a first image (Mal) and a plurality of second images (Ds1 to Ds4), the first image (Mal) being based on an image (GMA) of the game application running in the game device with which the first account is associated, wherein
each of the plurality of second images (Ds1 to Ds4) is associated with different accounts among a plurality of accounts that belong to the group including the first account,
while a game device with which an account associated with one of the second images is streaming the streaming game image,
when the account associated with the one of the second images is the first account, the one of the second images comprises an image based on the image of the running game application, and
when the account associated with the one of the second images is the another account, the one of the second images comprises the streaming game image received from the another game device with which the another account is associated, and
while the game device associated with the account associated with the one of the second images is not streaming the streaming game image, the one of the second images comprises an image that represents the account associated with the one of the second images.

16. A program causing a first game device (30) with which a first account is associated, the program causing one or more processors to perform:
streaming a streaming game image that is based on an image of a running game application to another game device with which another account belonging to a group, in which the first account is joining, is associated;
receiving a streaming game image from the another game device with which the another account joining the group is associated; and
generating a first display image (Sd) comprising a first image (Mal) and a plurality of second images (Ds1 to Ds4), the first image (Mal) being based on an image (GMA) of the game application running in the game device with which the first account is associated, wherein
each of the plurality of second images (Ds1 to Ds4) is associated with different accounts among a plurality of accounts that belong to the group including the first account,
while a game device with which an account associated with one of the second images is streaming the streaming game image,
when the account associated with the one of the second images is the first account, the one of the second images comprises an image based on the image of the running game application, and
when the account associated with the one of the second images is the another account, the one of the second images comprises the streaming game image received from the another game device with which the another account is associated, and
while the game device associated with the account associated with the one of the second images is not streaming the streaming game image, the one of the second images comprises an image that represents the account associated with the one of the second images.

17. An information processing system (100) comprising:
a transmitter configured to transmit information comprising a plurality of streaming game images each based on an image of a game application running in each of a plurality of game devices (30) with which a plurality of accounts in a group are associated, respectively; and
a stream controller configured to manage streaming in the group, wherein
the stream controller is configured to transmit first information to the game devices(30), indicating accounts streaming the streaming game images among the group,
each one of the plurality of game devices (30) comprises
a stream transmitter configured to stream an image of a game application being executed by the one of the game devices to another game device,
a receiver configured to receive an image of a game application being executed by the another game device, and
an image generator,
the image generator is configured to generate a first display image (Sd) comprising a first image (Mal) and a plurality of second images (Ds1 to Ds4), the first image (Mal) showing the image (GMA) of the game application being executed by the one of the game devices,
the plurality of second images each associated with different accounts, including the account associated with the one of the game devices, among a plurality of accounts that belong to the group,
while a game device with which an account associated with one of the second images is streaming the streaming game image,
when the account associated with the one of the second images is the account associated with the one of the game devices, the one of the second images comprises an image based on the image of the game application being executed by the one of the game devices, and
when the account associated with the one of the second images is the another account, the one of the second images comprises the streaming game image received from the another game device associated with the another account, and
while the game device associated with the account associated with the one of the second images is not streaming the streaming game image, the one of the second images comprises an image that represents the account associated with the one of the second images.

18. The information processing system according to claim 17, wherein
the stream controller is configured to control at most a predetermined number of game devices to be in a streaming enable state, the predetermined number being smaller than an upper limit number of accounts that belong to the group.

19. The information processing system according to claim 17 or 18, wherein the manager is configured to transmit second information indicating all accounts that belong to the group to each of the plurality of game devices, the second information including account information of an account that has not joined the group.
